(19) Europäisches Patentamt
European Patent Office
Office européen des brevets

(11) EP 3 491 065 B1

(12) EUROPÄISCHE PATENTSCHRIFT

(45) Veröffentlichungstag und Bekanntmachung des Hinweises auf die Patenterteilung:
**12.05.2021 Patentblatt 2021/19**

(21) Anmeldenummer: **17739620.7**

(22) Anmeldetag: **21.07.2017**

(51) Int Cl.:
***C08L 77/02*** (2006.01) ***C08L 77/06*** (2006.01)
***B29C 67/00*** (2017.01) ***B33Y 80/00*** (2015.01)
***B33Y 70/00*** (2020.01) ***B33Y 10/00*** (2015.01)

(86) Internationale Anmeldenummer:
**PCT/EP2017/068534**

(87) Internationale Veröffentlichungsnummer:
**WO 2018/019730 (01.02.2018 Gazette 2018/05)**

# (54) POLYAMIDBLENDS ENTHALTEND EINEN POLYARYLETHER FÜR LASERSINTERPULVER

POLYAMIDE BLENDS CONTAINING A POLYARYL ETHER FOR LASER SINTERING POWDER

MELANGES DE POLYAMIDES COMPRENANT UN POLYARYLETHER POUR POUDRE DE FRITTAGE LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2016 EP 16181973**

(43) Veröffentlichungstag der Anmeldung:
**05.06.2019 Patentblatt 2019/23**

(73) Patentinhaber: **BASF SE**
**67056 Ludwigshafen (DE)**

(72) Erfinder:
- **GABRIEL, Claus**
  **67056 Ludwigshafen (DE)**
- **WEBER, Martin**
  **67056 Ludwigshafen (DE)**
- **KLOKE, Philipp**
  **78713 Schramberg (DE)**
- **MEIER, Thomas**
  **67056 Ludwigshafen (DE)**

(74) Vertreter: **BASF IP Association**
**BASF SE**
**G-FLP-C006**
**67056 Ludwigshafen (DE)**

(56) Entgegenhaltungen:
**WO-A1-2012/041793** **WO-A1-2016/112283**
**CN-A- 104 231 607** **US-A1- 2014 141 166**

- **VERBELEN LEANDER ET AL: "Characterization of polyamide powders for determination of laser sintering processability", EUROPEAN POLYMER JOURNAL, PERGAMON PRESS LTD. OXFORD, GB, Bd. 75, 21. Dezember 2015 (2015-12-21), Seiten 163-174, XP029398871, ISSN: 0014-3057, DOI: 10.1016/J.EURPOLYMJ.2015.12.014**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 491 065 B1

## Beschreibung

Die vorliegende Erfindung betrifft ein Verfahren zur Herstellung eines Formkörpers durch selektives Lasersintern eines Sinterpulvers (SP). Das Sinterpulver (SP) enthält mindestens ein teilkristallines Polyamid, mindestens ein Polyamid 6I/6T und mindestens einen Polyarylether. Darüber hinaus betrifft die vorliegende Erfindung einen Formkörper erhältlich nach dem erfindungsgemäßen Verfahren sowie die Verwendung eines Polyarylethers in einem Sinterpulver (SP) zur Verbreiterung des Sinterfensters ($W_{SP}$) des Sinterpulvers (SP).

Die schnelle Bereitstellung von Prototypen ist eine in der jüngsten Zeit häufig gestellte Aufgabe. Ein Verfahren, das für dieses sogenannte "rapid prototyping" besonders geeignet ist, ist das selektive Lasersintern (SLS). Dabei wird ein Kunststoffpulver in einer Kammer selektiv mit einem Laserstrahl belichtet. Das Pulver schmilzt auf, die geschmolzenen Partikel laufen ineinander und erstarren wieder. Wiederholtes Aufbringen von Kunststoffpulver und anschließendes Belichten mit einem Laser ermöglicht die Modellierung von dreidimensionalen Formkörpern.

Das Verfahren des selektiven Lasersinterns zur Herstellung von Formkörpern aus pulverförmigen Polymeren wird ausführlich in den Patentschriften US 6,136,948 und WO 96/06881 beschrieben.

Von besonderer Bedeutung beim selektiven Lasersintern ist das Sinterfenster des Sinterpulvers. Dieses sollte möglichst breit sein, um einen Verzug von Bauteilen beim Lasersintern zu reduzieren. Zudem ist die Rezyklierbarkeit des Sinterpulvers von besonderer Bedeutung. Im Stand der Technik sind verschiedene Sinterpulver für den Einsatz beim selektiven Lasersintern beschrieben.

Die WO 2009/114715 beschreibt ein Sinterpulver zum selektiven Lasersintern, das mindestens 20 Gew.-% Polyamidpolymer enthält. Dieses Polyamidpolymer enthält ein verzweigtes Polyamid, wobei das verzweigte Polyamid hergestellt ist ausgehend von einer Polycarbonsäure, die drei oder mehr Carbonsäuregruppen aufweist.

Die WO 2011/124278 beschreibt Sinterpulver, die Copräzipitate von PA 11 mit PA 1010, von PA 11 mit PA 1012, von PA 12 mit PA 1012, von PA 12 mit PA 1212 oder von PA 12 mit PA 1013 enthalten.

Die EP 1 443 073 beschreibt Sinterpulver für ein selektives Lasersinterverfahren. Diese Sinterpulver enthalten ein Polyamid 12, Polyamid 11, Polyamid 6.10, Polyamid 6.12, Polyamid 10.12, Polyamid 6 oder Polyamid 6.6 sowie eine Rieselhilfe.

Die WO 2016/112283 beschreibt eine Pulverzusammensetzung zum selektiven Lasersintern. Diese Pulverzusammensetzung enthält ein Nyloncopolymer, das eine aromatische und eine aliphatische Komponente enthält.

Die WO 2012/041793 offenbart ebenfalls eine Pulverzusammensetzung zum selektiven Lasersintern. Diese Pulverzusammensetzung enthält mindestens 40 Gew.-% Polyamid 410.

Die US 2014/141166 offenbart einen Polyamidblend, der im 3D-Druckverfahren eingesetzt werden kann. Der Polyamidblend enthält ein teilkristallines Polyamid und ein amorphes Polyamid.

Verbellen Leander et al. (Characterization of polyamide powders for determination of laser sintering processability. European Polymer Journal, Bd. 75 [2015-12-21], 163-174) offenbart eine Untersuchung zum selektiven Lasersinterverhalten von Polyamiden.

Die CN 104231607 offenbart ein Sinterpulver für das selektive Lasersintern, das einen Blend aus Nylon und einem Polyphenylthioether enthält.

Die US 2015/0259530 beschreibt ein teilkristallines Polymer sowie ein Sekundärmaterial, die in einem Sinterpulver zum selektiven Lasersintern eingesetzt werden können. Bevorzugt werden Polyetheretherketon oder Polyetherketonketon als teilkristallines Polymer eingesetzt und Polyetherimid als Sekundärmaterial.

Die US 2014/0141166 beschreibt einen Polyamid-Blend der als Filament in einem 3D-Druckprozess verwendet werden kann. Dieser Polyamid-Blend enthält als teilkristallines Polyamid beispielsweise Polyamid 6, Polyamid 66, Polyamid 69, Polyamid 610, Polyamid 7, Polyamid 11, Polyamid 12 oder Mischungen daraus und als amorphes Polyamid bevorzugt Polyamid 6/3T, wobei im Bereich von 30 bis 70 Gew.-% des amorphen Polyamids in dem Polyamid-Blend enthalten sind.

Nachteilig bei den im Stand der Technik beschriebenen Sinterpulvern zur Herstellung von Formkörpern durch selektives Lasersintern ist, dass das Sinterfenster des Sinterpulvers häufig verkleinert ist gegenüber dem Sinterfenster des reinen Polyamids oder des reinen teilkristallinen Polymers. Eine Verkleinerung des Sinterfensters ist nachteilig, da sich dadurch die Formkörper während der Herstellung durch selektives Lasersintern häufig verziehen. Durch diesen Verzug ist eine Verwendung oder Weiterverarbeitung der Formkörper nahezu ausgeschlossen. Der Verzug kann bereits während der Herstellung der Formkörper so stark sein, dass ein weiterer Schichtauftrag nicht möglich ist und daher der Herstellungsprozess abgebrochen werden muss.

Die der vorliegenden Erfindung zugrunde liegende Aufgabe besteht somit darin, ein Verfahren zur Herstellung von Formkörpern durch selektives Lasersintern bereitzustellen, das die vorgenannten Nachteile der im Stand der Technik beschriebenen Verfahren nicht oder nur in geringem Maße aufweist. Das Verfahren soll möglichst einfach und kostengünstig durchführbar sein.

Gelöst wird diese Aufgabe durch ein Verfahren zur Herstellung eines Formkörpers durch selektives Lasersintern eines Sinterpulvers (SP), wobei das Sinterpulver (SP) die Komponenten

(A) mindestens ein teilkristallines Polyamid enthaltend mindestens eine Einheit ausgewählt aus der Gruppe bestehend aus $-NH-(CH_2)_m-NH-$ Einheiten, wobei m 4, 5, 6, 7 oder 8 bedeutet, $-CO-(CH_2)_n-NH-$ Einheiten, wobei n 3, 4, 5, 6 oder 7 bedeutet, und $-CO-(CH_2)_o-CO-$ Einheiten, wobei o 2, 3, 4, 5 oder 6 bedeutet,
(B) mindestens ein Polyamid 6I/6T,
(C) mindestens einen Polyarylether enthält, wobei die Komponente (B) ein amorphes Copolyamid ist und wobei die Komponente (C) ein Polyarylether, der Bausteine der allgemeinen Formel (I) enthält, ist

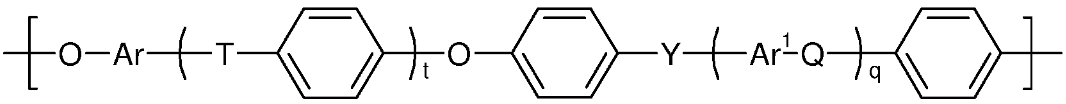

(I)

mit folgenden Bedeutungen:

t, q: unabhängig voneinander 0, 1, 2 oder 3,
Q, T, Y: unabhängig voneinander jeweils eine chemische Bindung oder Gruppe, ausgewählt aus -O-, -S-, $-SO_2-$, S=O, C=O, -N=N- und - $CR^aR^b$-, wobei $R^a$ und $R^b$ unabhängig voneinander jeweils für ein Wasserstoffatom oder eine $C_1$-$C_{12}$-Alkyl-, $C_1$-$C_{12}$-Alkoxy- oder $C_6$-$C_{18}$-Arylgruppe stehen und wobei wenigstens eines aus Q, T und Y für - $SO_2$- steht und
Ar, $Ar^1$: unabhängig voneinander eine Arylengruppe mit von 6 bis 18 Kohlenstoffatomen.

Es wurde überraschend gefunden, dass das im erfindungsgemäßen Verfahren eingesetzte Sinterpulver (SP) ein so weit verbreitetes Sinterfenster ($W_{SP'}$) aufweist, dass der durch selektives Lasersintern des Sinterpulvers (SP) hergestellte Formkörper keinen oder einen deutlich reduzierten Verzug aufweist. Außerdem weist der erfindungsgemäß hergestellte Formkörper eine erhöhte Bruchdehnung auf. Zudem ist die Rezyklierbarkeit des im erfindungsgemäßen Verfahren eingesetzten Sinterpulvers (SP) auch nach thermischer Alterung hoch. Dies bedeutet, dass bei der Herstellung des Formkörpers nicht aufgeschmolzenes Sinterpulver (SP) wiederverwendet werden kann. Das Sinterpulver (SP) besitzt auch nach mehreren Lasersinterzyklen ähnlich vorteilhafte Sintereigenschaften wie beim ersten Sinterzyklus.
Die durch selektives Lasersintern des erfindungsgemäßen Sinterpulver (SP) erhaltenen Formkörper zeigen zudem eine geringere Wasseraufnahme nach Lagerung bei 70 °C für 336 Stunden bei 62 % relativer Feuchte gegenüber Formkörpern die hergestellt sind durch selektives Lasersintern einer Mischung aus den Komponenten (A) und (B). Dadurch sind auch die mechanischen Eigenschaften der erfindungsgemäß hergestellten Formkörper, insbesondere im konditionierten Zustand, verbessert gegenüber denen von Formkörpern im konditionierten Zustand, die nur aus einer Mischung der Komponenten (A) und (B) hergestellt sind.
Das erfindungsgemäß eingesetzte Sinterpulver (SP) weist zudem höhere Glasübergangstemperaturen auf als eine Mischung aus den Komponenten (A) und (B).
Nachfolgend wird das erfindungsgemäße Verfahren näher erläutert.

## Selektives Lasersintern

Das Verfahren des selektiven Lasersinterns ist dem Fachmann an sich beispielsweise aus der US 6,136,948 und der WO 96/06881 bekannt.
Beim Lasersintern wird eine erste Schicht eines sinterbaren Pulvers in einem Pulverbett angeordnet und mit einem Laserstrahl lokal und kurzzeitig belichtet. Dabei wird nur der Teil des sinterbaren Pulvers, der vom Laserstrahl belichtet worden ist, selektiv aufgeschmolzen (selektives Lasersintern). Das aufgeschmolzene sinterbare Pulver fließt ineinander und bildet so eine homogene Schmelze in dem belichteten Bereich. Im Anschluss kühlt der Bereich wieder ab und die homogene Schmelze erstarrt wieder. Dann wird das Pulverbett um die Schichtdicke der ersten Schicht abgesenkt, eine zweite Schicht des sinterbaren Pulvers aufgebracht, mit dem Laser selektiv belichtet und aufgeschmolzen. Dadurch verbindet sich zum einen die obere zweite Schicht des sinterbaren Pulvers mit der unteren ersten Schicht, außerdem verbinden sich die Partikel des sinterbaren Pulvers innerhalb der zweiten Schicht durch das Aufschmelzen miteinander. Indem das Absenken des Pulverbetts, das Aufbringen des sinterbaren Pulvers und das Aufschmelzen des sinterbaren Pulvers wiederholt werden, können dreidimensionale Formkörper hergestellt werden. Durch die selektive Belichtung bestimmter Stellen mit dem Laserstrahl ist es möglich, Formkörper herzustellen, die beispielsweise auch Hohlräume aufweisen. Ein zusätzliches Stützmaterial ist nicht notwendig, da das nicht aufgeschmolzene sinterbare Pulver selbst als Stützmaterial fungiert.
Als sinterbares Pulver beim selektiven Lasersintern eignen sich alle dem Fachmann bekannten Pulver, die durch Belichtung mit einem Laser aufgeschmolzen werden können. Erfindungsgemäß wird als sinterbares Pulver beim

selektiven Lasersintern das Sinterpulver (SP) eingesetzt.

Im Rahmen der vorliegenden Erfindung können daher die Begriffe "sinterbares Pulver" und "Sinterpulver (SP)" synonym gebraucht werden, sie besitzen dann die gleiche Bedeutung.

Geeignete Laser für das selektive Lasersintern sind dem Fachmann bekannt und beispielsweise Faserlaser, Nd:YAG-Laser (Neodym-dotierter Yttrium-Aluminium-Granat-Laser) und Kohlendioxidlaser.

Von besonderer Bedeutung bei dem selektiven Lasersinterverfahren ist der Schmelzbereich des sinterbaren Pulvers, das sogenannte "Sinterfenster (W)". Ist das sinterbare Pulver das erfindungsgemäße Sinterpulver (SP), so wird im Rahmen der vorliegenden Erfindung das Sinterfenster (W) als "Sinterfenster ($W_{SP}$)" des Sinterpulvers (SP) bezeichnet. Ist das sinterbare Pulver eine Mischung aus den im Sinterpulver (SP) enthaltenen Komponenten (A) und (B), so wird im Rahmen der vorliegenden Erfindung das Sinterfenster (W) als "Sinterfenster ($W_{AB}$)" der Mischung aus den Komponenten (A) und (B) bezeichnet.

Das Sinterfenster (W) eines sinterbaren Pulvers kann beispielsweise durch dynamische Differenzkalorimetrie (DDK; differential scanning calorimetry, DSC) bestimmt werden.

Bei der dynamischen Differenzkalorimetrie werden die Temperatur einer Probe, im vorliegenden Fall also einer Probe des sinterbaren Pulvers, und die Temperatur einer Referenz linear mit der Zeit geändert. Dazu werden der Probe und der Referenz Wärme zugeführt bzw. aus diesen abgeführt. Es wird die Wärmemenge Q bestimmt, die notwendig ist, um die Probe auf der gleichen Temperatur wie die Referenz zu halten. Als Referenzwert dient die der Referenz zugeführte bzw. abgeführte Wärmemenge $Q_R$.

Geht die Probe eine endotherme Phasenumwandlung ein, muss eine zusätzliche Wärmemenge Q zugeführt werden, um die Probe auf der gleichen Temperatur wie die Referenz zu halten. Findet eine exotherme Phasenumwandlung statt, so muss eine Wärmemenge Q abgeführt werden, um die Probe auf der gleichen Temperatur wie die Referenz zu halten. Die Messung liefert ein DSC-Diagramm, in dem die Wärmemenge Q, die der Probe zugeführt bzw. aus dieser abgeführt wird, in Abhängigkeit von der Temperatur T aufgetragen wird.

Üblicherweise wird bei der Messung zunächst ein Heizlauf (H) durchgeführt, das heißt, die Probe und die Referenz werden linear erwärmt. Während des Schmelzens der Probe (Phasenumwandlung fest/flüssig), muss eine zusätzliche Wärmemenge Q zugeführt werden, um die Probe auf der gleichen Temperatur wie die Referenz zu halten. Im DSC-Diagramm wird dann ein Peak beobachtet, der sogenannte Aufschmelzpeak.

Im Anschluss an den Heizlauf (H) wird üblicherweise ein Kühllauf (K) gemessen. Dabei werden die Probe und die Referenz linear abgekühlt, es wird also Wärme aus der Probe und der Referenz abgeführt. Während der Kristallisation bzw. Erstarrung der Probe (Phasenumwandlung flüssig/fest) muss eine größere Wärmemenge Q abgeführt werden, um die Probe auf der gleichen Temperatur wie die Referenz zu halten, da bei der Kristallisation bzw. dem Erstarren Wärme frei wird. In dem DSC-Diagramm des Kühllaufs (K) wird dann ein Peak, der sogenannte Kristallisationspeak, in entgegengesetzter Richtung zu dem Aufschmelzpeak beobachtet.

Im Rahmen der vorliegenden Erfindung erfolgt das Erwärmen während des Heizlaufs üblicherweise mit einer Heizrate von 20 K/min. Das Abkühlen während des Kühllaufs erfolgt im Rahmen der vorliegenden Erfindung üblicherweise mit einer Kühlrate von 20 K/min.

Ein DSC-Diagramm mit einem Heizlauf (H) und einem Kühllauf (K) ist exemplarisch in Figur 1 dargestellt. Anhand des DSC-Diagramms können die Onset-Temperatur des Aufschmelzens ($T_M^{onset}$) und die Onset-Temperatur der Kristallisation ($T_C^{onset}$) bestimmt werden.

Zur Bestimmung der Onset-Temperatur des Aufschmelzens ($T_M^{onset}$) wird eine Tangente an die Basislinie des Heizlaufs (H), die bei den Temperaturen unterhalb des Aufschmelzpeaks verläuft, angelegt. Eine zweite Tangente wird an den ersten Wendepunkt des Aufschmelzpeaks angelegt, der bei Temperaturen unterhalb der Temperatur am Maximum des Aufschmelzpeaks liegt. Die beiden Tangenten werden so weit extrapoliert, dass sie sich schneiden. Die senkrechte Extrapolation des Schnittpunkts auf die Temperaturachse gibt die Onset-Temperatur des Aufschmelzens ($T_M^{onset}$) an.

Zur Bestimmung der Onset-Temperatur der Kristallisation ($T_C^{onset}$) wird eine Tangente an die Basislinie des Kühllaufs (K), die bei den Temperaturen oberhalb des Kristallisationspeaks verläuft, angelegt. Eine zweite Tangente wird an den Wendepunkt des Kristallisationspeaks angelegt, der bei Temperaturen oberhalb der Temperatur am Minimum des Kristallisationspeaks liegt. Die beiden Tangenten werden so weit extrapoliert, dass sie sich schneiden. Die senkrechte Extrapolation des Schnittpunkts auf die Temperaturachse gibt die Onset-Temperatur der Kristallisation ($T_C^{onset}$) an.

Das Sinterfenster (W) ergibt sich aus der Differenz zwischen der Onset-Temperatur des Aufschmelzens ($T_M^{onset}$) und der Onset-Temperatur der Kristallisation ($T_C^{onset}$). Es gilt also:

$$W = T_M^{onset} - T_C^{onset} .$$

Im Rahmen der vorliegenden Erfindung haben die Begriffe "Sinterfenster (W)", "Größe des Sinterfensters (W)" und "Differenz zwischen der Onset-Temperatur des Aufschmelzens ($T_M^{onset}$) und der Onset-Temperatur der Kristallisation ($T_C^{onset}$)" die gleiche Bedeutung und werden synonym gebraucht.

Die Bestimmung des Sinterfensters ($W_{SP}$) des Sinterpulvers (SP) und die Bestimmung des Sinterfensters ($W_{AB}$) der Mischung aus den Komponenten (A) und (B) erfolgt wie vorstehend beschrieben. Als Probe wird dann zur Bestimmung des Sinterfensters ($W_{SP}$) des Sinterpulvers (SP) das Sinterpulver (SP) verwendet. Zur Bestimmung des Sinterfensters ($W_{AB}$) der Mischung aus den Komponenten (A) und (B) wird eine Mischung (Blend) aus den in dem Sinterpulver (SP) enthaltenen Komponenten (A) und (B) als Probe verwendet.

Sinterpulver (SP)

Erfindungsgemäß enthält das Sinterpulver (SP) als Komponente (A) mindestens ein teilkristallines Polyamid, als Komponente (B) mindestens ein Polyamid 6I/6T und als Komponente (C) mindestens einen Polyarylether.

Im Rahmen der vorliegenden Erfindung werden die Begriffe "Komponente (A)" und "mindestens ein teilkristallines Polyamid" synonym gebraucht und besitzen daher die gleiche Bedeutung.

Entsprechendes gilt für die Begriffe "Komponente (B)" und "mindestens ein Polyamid 6I/6T" sowie die Begriffe "Komponente (C)" und "mindestens ein Polyarylether". Diese Begriffe werden im Rahmen der vorliegenden Erfindung ebenfalls jeweils synonym gebraucht und besitzen daher die gleiche Bedeutung.

Das Sinterpulver (SP) kann die Komponenten (A), (B) und (C) in beliebigen Mengen enthalten.

Beispielsweise enthält das Sinterpulver im Bereich von 20 bis 90 Gew.-% der Komponente (A), im Bereich von 5 bis 40 Gew.-% der Komponente (B) und im Bereich von 5 bis 40 Gew.-% der Komponente (C), jeweils bezogen auf die Summe der Gewichtsprozente der Komponenten (A), (B) und (C), bevorzugt bezogen auf das Gesamtgewicht des Sinterpulvers (SP).

Bevorzugt enthält das Sinterpulver (SP) im Bereich von 45 bis 80 Gew.-% der Komponente (A), im Bereich von 10 bis 25 Gew.-% der Komponente (B) und im Bereich von 10 bis 30 Gew.-% der Komponente (C), jeweils bezogen auf die Summe der Gewichtsprozente der Komponenten (A), (B) und (C), bevorzugt bezogen auf das Gesamtgewicht des Sinterpulvers (SP).

Besonders bevorzugt enthält das Sinterpulver im Bereich von 53 bis 73 Gew.-% der Komponente (A), im Bereich von 12 bis 22 Gew.-% der Komponente (B) und im Bereich von 15 bis 25 Gew.-% der Komponente (C), jeweils bezogen auf die Summe der Gewichtsprozente der Komponenten (A), (B) und (C), bevorzugt bezogen auf das Gesamtgewicht des Sinterpulvers (SP).

Gegenstand der vorliegenden Erfindung ist daher auch ein Verfahren, bei dem das Sinterpulver (SP) im Bereich von 20 bis 90 Gew.-% der Komponente (A), im Bereich von 5 bis 40 Gew.-% der Komponente (B) und im Bereich von 5 bis 40 Gew.-% der Komponente (C) enthält, jeweils bezogen auf die Summe der Gewichtsprozente der Komponenten (A), (B) und (C).

Das Sinterpulver (SP) kann außerdem zusätzlich zumindest ein Additiv, ausgewählt aus der Gruppe bestehend aus Antinukleierungsmitteln, Stabilisatoren, Endgruppenfunktionalisierern und Farbstoffen enthalten.

Gegenstand der vorliegenden Erfindung ist daher auch Verfahren, bei dem das Sinterpulver (SP) zusätzlich zumindest ein Additiv ausgewählt aus der Gruppe bestehend aus Antinukleierungsmitteln, Stabilisatoren, Endgruppenfunktionalisierern und Farbstoffen enthält.

Ein geeignetes Antinukleierungsmittel ist beispielsweise Lithiumchlorid. Geeignete Stabilisatoren sind beispielsweise Phenole, Phosphite und Kupferstabilisatoren. Geeignete Endgruppenfunktionalisierer sind beispielsweise Terephthalsäure, Adipinsäure und Propionsäure. Bevorzugte Farbstoffe sind beispielsweise ausgewählt aus der Gruppe bestehend aus Ruß, Neutralrot, anorganischen Schwarzfarbstoffen und organischen Schwarzfarbstoffen.

Besonders bevorzugt ist das zumindest eine Additiv ausgewählt aus der Gruppe bestehend aus Stabilisatoren und Farbstoffen.

Als Stabilisator sind Phenole insbesondere bevorzugt.

Daher ist das zumindest eine Additiv insbesondere bevorzugt ausgewählt aus der Gruppe bestehend aus Phenolen, Ruß, anorganischen Schwarzfarbstoffen und organischen Schwarzfarbstoffen.

Ruß ist dem Fachmann bekannt und beispielsweise erhältlich unter dem Handelsnamen Spezialschwarz 4 von Evonik, unter dem Handelsnamen Printex U von Evonik, unter dem Handelsnamen Printex 140 von Evonik, unter dem Handelsnamen Spezialschwarz 350 von Evonik oder unter dem Handelsnamen Spezialschwarz 100 von Evonik.

Ein bevorzugter anorganischer Schwarzfarbstoff ist beispielsweise erhältlich unter dem Handelsnamen Sicopal Black K0090 der BASF SE oder unter dem Handelsnamen Sicopal Black K0095 der BASF SE.

Ein bevorzugter organischer Schwarzfarbstoff ist beispielsweise Nigrosin.

Das Sinterpulver (SP) kann beispielsweise im Bereich von 0,1 bis 10 Gew.-% des zumindest einen Additivs enthalten, bevorzugt im Bereich von 0,2 bis 5 Gew.-% und insbesondere bevorzugt im Bereich von 0,3 bis 2,5 Gew.-%, jeweils bezogen auf das Gesamtgewicht des Sinterpulvers (SP).

Die Summe der Gewichtsprozente der Komponenten (A), (B) und (C) sowie gegebenenfalls des zumindest einen Additivs addieren sich üblicherweise zu 100 Gewichtsprozent.

Das Sinterpulver (SP) weist Partikel auf. Diese Partikel haben beispielsweise eine Größe im Bereich von 10 bis 250 μm, bevorzugt im Bereich von 15 bis 200 μm, besonders bevorzugt im Bereich von 20 bis 120 μm und insbesondere bevorzugt im Bereich von 20 bis 110 μm.

Das erfindungsgemäße Sinterpulver (SP) weist beispielsweise

einen D10-Wert im Bereich von 10 bis 30 μm,
einen D50-Wert im Bereich von 25 bis 70 μm und
einen D90-Wert im Bereich von 50 bis 150 μm auf.

Bevorzugt weist das erfindungsgemäße Sinterpulver (SP)

einen D10-Wert im Bereich von 20 bis 30 μm,
einen D50-Wert im Bereich von 40 bis 60 μm und
einen D90-Wert im Bereich von 80 bis 110 μm auf.

Gegenstand der vorliegenden Erfindung ist daher auch ein Verfahren, bei dem das Sinterpulver (SP)

einen D10-Wert im Bereich von 10 bis 30 μm,
einen D50-Wert im Bereich von 25 bis 70 μm und
einen D90-Wert im Bereich von 50 bis 150 μm

aufweist.

Unter dem "D10-Wert" wird im Rahmen der vorliegenden Erfindung die Partikelgröße verstanden, bei der 10 Vol.-% der Partikel bezogen auf das Gesamtvolumen der Partikel kleiner oder gleich dem D10-Wert sind und 90 Vol.-% der Partikel bezogen auf das Gesamtvolumen der Partikel größer als der D10-Wert sind. In Analogie dazu wird unter dem "D50-Wert" die Partikelgröße verstanden, bei der 50 Vol.-% der Partikel bezogen auf das Gesamtvolumen der Partikel kleiner oder gleich dem D50-Wert sind und 50 Vol.-% der Partikel bezogen auf das Gesamtvolumen der Partikel größer als der D50-Wert sind. Entsprechend wird unter dem "D90-Wert" die Partikelgröße verstanden, bei der 90 Vol.-% der Partikel bezogen auf das Gesamtvolumen der Partikel kleiner oder gleich dem D90-Wert sind und 10 Vol.-% der Partikel bezogen auf das Gesamtvolumen der Partikel größer als der D90-Wert sind.

Zur Ermittlung der Partikelgrößen wird das Sinterpulver (SP) trocken mittels Druckluft oder in einem Lösungsmittel, wie beispielsweise Wasser oder Ethanol, suspendiert und diese Suspension vermessen. Die Bestimmung des D10-, D50- und D90-Wertes erfolgt mittels Laserbeugung unter Verwendung eines Master Sizers 3000 der Firma Malvern. Die Auswertung erfolgt mittels Fraunhofer-Beugung.

Das Sinterpulver (SP) weist üblicherweise eine Schmelztemperatur ($T_M$) im Bereich von 180 bis 270 °C auf. Bevorzugt liegt die Schmelztemperatur ($T_M$) des Sinterpulvers (SP) im Bereich von 185 bis 260 °C und insbesondere bevorzugt im Bereich von 190 bis 245 °C.

Gegenstand der vorliegenden Erfindung ist daher auch ein Verfahren, bei dem das Sinterpulver (SP) eine Schmelztemperatur ($T_M$) im Bereich von 180 bis 270 °C aufweist.

Die Schmelztemperatur ($T_M$) wird im Rahmen der vorliegenden Erfindung bestimmt mittels dynamischer Differenzkalorimetrie (DDK; Differential Scanning Calorimetry, DSC). Es werden wie vorstehend beschrieben üblicherweise ein Heizlauf (H) und ein Kühllauf (K) gemessen. Dabei wird ein DSC-Diagramm wie es in Figur 1 beispielhaft gezeigt ist erhalten. Unter der Schmelztemperatur ($T_M$) wird dann die Temperatur verstanden, bei der der Aufschmelzpeak des Heizlaufs (H) des DSC-Diagramms ein Maximum aufweist. Die Schmelztemperatur ($T_M$) ist also von der Onset-Temperatur des Aufschmelzens ($T_M^{onset}$) verschieden. Üblicherweise liegt die Schmelztemperatur ($T_M$) oberhalb der Onset-Temperatur des Aufschmelzens ($T_M^{onset}$).

Das Sinterpulver (SP) weist außerdem üblicherweise eine Kristallisationstemperatur ($T_C$) im Bereich von 120 bis 190 °C auf. Bevorzugt liegt die Kristallisationstemperatur ($T_C$) des Sinterpulvers (SP) im Bereich von 130 bis 180 °C und insbesondere bevorzugt im Bereich von 140 bis 180 °C.

Gegenstand der vorliegenden Erfindung ist daher auch ein Verfahren, bei dem das Sinterpulver (SP) eine Kristallisationstemperatur ($T_C$) im Bereich von 120 bis 190 °C aufweist.

Die Kristallisationstemperatur ($T_C$) wird im Rahmen der vorliegenden Erfindung mittels dynamischer Differenzkalorimetrie (DDK; Differential Scanning Calorimetry, DSC) bestimmt. Dabei werden wie vorstehend beschrieben üblicherweise ein Heizlauf (H) und ein Kühllauf (K) gemessen. Dabei wird ein DSC-Diagramm wie es in Figur 1 beispielhaft gezeigt ist erhalten. Die Kristallisationstemperatur ($T_C$) ist dann die Temperatur am Minimum des Kristallisationspeaks der DSC-Kurve. Die Kristallisationstemperatur ($T_C$) ist also von der Onset-Temperatur der Kristallisation ($T_C^{onset}$) verschieden. Die Kristallisationstemperatur ($T_C$) liegt üblicherweise unterhalb der Onset-Temperatur der Kristallisation ($T_C^{onset}$).

Das Sinterpulver (SP) weist üblicherweise außerdem eine Glasübergangstemperatur ($T_G$) auf. Die Glasübergangstemperatur ($T_G$) des Sinterpulvers (SP) liegt beispielsweise im Bereich von 20 bis 150 °C, bevorzugt im Bereich von 50 bis 100 °C und insbesondere bevorzugt im Bereich von 70 bis 80 °C.

Die Glasübergangstemperatur ($T_G$) des Sinterpulvers (SP) wird mittels dynamischer Differenzkalorimetrie bestimmt. Zur Bestimmung werden erfindungsgemäß zunächst ein erster Heizlauf (H1), dann ein Kühllauf (K) und anschließend ein zweiter Heizlauf (H2) einer Probe des Sinterpulvers (SP) (Einwaage ca. 8,5 g) gemessen. Die Heizrate beim ersten Heizlauf (H1) und beim zweiten Heizlauf (H2) beträgt 20 K/min, die Kühlrate beim Kühllauf (K) beträgt ebenfalls 20 K/min. Im Bereich des Glasübergangs des Sinterpulvers (SP) wird im zweiten Heizlauf (H2) des DSC-Diagramms eine Stufe erhalten. Die Glasübergangstemperatur ($T_G$) des Sinterpulvers (SP) entspricht der Temperatur bei halber Stufenhöhe im DSC-Diagramm. Dieses Verfahren zur Bestimmung der Glasübergangstemperatur ist dem Fachmann bekannt.

Das Sinterpulver (SP) weist außerdem üblicherweise ein Sinterfenster ($W_{SP}$) auf. Das Sinterfenster ($W_{SP}$) ist, wie vorstehend beschrieben, die Differenz zwischen der Onset-Temperatur des Aufschmelzens ($T_M^{onset}$) und der Onset-Temperatur der Kristallisation ($T_C^{onset}$). Die Onset-Temperatur des Aufschmelzens ($T_M^{onset}$) und die Onset-Temperatur der Kristallisation ($T_C^{onset}$) werden wie vorstehend beschrieben bestimmt.

Das Sinterfenster ($W_{SP}$) des Sinterpulvers (SP) liegt vorzugsweise im Bereich von 18 bis 45 K (Kelvin), besonders bevorzugt im Bereich von 21 bis 40 K und insbesondere bevorzugt im Bereich von 21 bis 35 K.

Gegenstand der vorliegenden Erfindung ist daher auch ein Verfahren, bei dem das Sinterpulver (SP) ein Sinterfenster ($W_{SP}$) aufweist, wobei das Sinterfenster ($W_{SP}$) die Differenz zwischen der Onset-Temperatur des Aufschmelzens ($T_M^{onset}$) und der Onset-Temperatur der Kristallisation ($T_C^{onset}$) ist und wobei das Sinterfenster ($W_{SP}$) im Bereich von 18 bis 45 K liegt.

Das Sinterpulver (SP) kann nach allen dem Fachmann bekannten Methoden hergestellt werden. Bevorzugt wird das Sinterpulver (SP) hergestellt durch Vermahlung der Komponenten (A), (B) und (C) sowie gegebenenfalls des zumindest einen Additivs.

Die Herstellung des Sinterpulvers (SP) durch Vermahlung kann nach allen dem Fachmann bekannten Methoden durchgeführt werden. Beispielsweise werden die Komponenten (A), (B) und (C) sowie gegebenenfalls das zumindest eine Additiv in eine Mühle gegeben und darin vermahlen.

Als Mühle eignen sich alle dem Fachmann bekannten Mühlen, beispielsweise Sichtermühlen, Gegenstrahlmühlen, Hammermühlen, Kugelmühlen, Schwingmühlen oder Rotormühlen.

Das Mahlen in der Mühle kann ebenfalls nach allen dem Fachmann bekannten Methoden erfolgen. Beispielsweise kann die Mahlung unter Inertgas stattfinden und/oder unter Kühlung mit flüssigem Stickstoff. Die Kühlung mit flüssigem Stickstoff ist bevorzugt.

Die Temperatur bei der Mahlung ist beliebig. Bevorzugt wird die Mahlung bei Temperaturen von flüssigem Stickstoff durchgeführt, beispielsweise bei einer Temperatur im Bereich von -210 bis -195 °C.

Gegenstand der vorliegenden Erfindung ist daher auch ein Verfahren, bei dem das Sinterpulver (SP) hergestellt wird durch Vermahlung der Komponenten (A), (B) und (C) bei einer Temperatur im Bereich von -210 bis -195°C.

Die Komponente (A), die Komponente (B), die Komponente (C) sowie gegebenenfalls das zumindest eine Additiv können nach allen dem Fachmann bekannten Methoden in die Mühle eingebracht werden. Beispielsweise können die Komponente (A), die Komponente (B) und die Komponente (C) sowie gegebenenfalls das zumindest eine Additiv separat in die Mühle gegeben und darin vermahlen und so miteinander vermischt werden. Außerdem ist es möglich und erfindungsgemäß bevorzugt, dass die Komponente (A), die Komponente (B) und die Komponente (C) sowie gegebenenfalls das zumindest eine Additiv miteinander compoundiert und anschließend in die Mühle gegeben werden.

Verfahren zur Compoundierung sind dem Fachmann als solche bekannt. Beispielsweise können die Komponente (A), die Komponente (B) und die Komponente (C) sowie gegebenenfalls das zumindest eine Additiv in einem Extruder compoundiert werden, anschließend aus diesem extrudiert und in die Mühle gegeben werden.

Komponente (A)

Die Komponente (A) ist mindestens ein teilkristallines Polyamid.

"Mindestens ein teilkristallines Polyamid" bedeutet erfindungsgemäß sowohl genau ein teilkristallines Polyamid als auch eine Mischung aus zwei oder mehreren teilkristallinen Polyamiden.

"Teilkristallin" bedeutet im Rahmen der vorliegenden Erfindung, dass das Polyamid eine Schmelzenthalpie $\Delta H2_{(A)}$ von größer als 45 J/g, bevorzugt von größer als 50 J/g und insbesondere bevorzugt von größer als 55 J/g aufweist, jeweils gemessen mittels dynamischer Differenzkalorimetrie (differential scanning calorimetry, DSC) gemäß ISO 11357-4 : 2014.

Die erfindungsgemäße Komponente (A) weist außerdem bevorzugt eine Schmelzenthalpie $\Delta H2_{(A)}$ von weniger als 200 J/g, besonders bevorzugt von weniger als 150 J/g und insbesondere bevorzugt von weniger als 100 J/g auf, jeweils gemessen mittels dynamischer Differenzkalorimetrie (differential scanning calorimetry, DSC) gemäß ISO 11357-4 : 2014.

Erfindungsgemäß enthält die Komponente (A) mindestens eine Einheit, ausgewählt aus der Gruppe bestehend aus $-NH-(CH_2)_m-NH-$ Einheiten, wobei m 4, 5, 6, 7 oder 8 bedeutet, $-CO-(CH_2)_n-NH-$ Einheiten, wobei n 3, 4, 5, 6 oder 7 bedeutet und $-CO-(CH_2)_o-CO-$ Einheiten, wobei o 2, 3, 4, 5 oder 6 bedeutet.

Bevorzugt enthält die Komponente (A) mindestens eine Einheit, ausgewählt aus der Gruppe bestehend aus $-NH-(CH_2)_m-NH-$ Einheiten, wobei m 5, 6, oder 7, bedeutet, $-CO-(CH_2)_n-NH-$ Einheiten, wobei n 4, 5 oder 6 bedeutet und $-CO-(CH_2)_o-CO-$ Einheiten, wobei o 3, 4 oder 5 bedeutet.

Insbesondere bevorzugt enthält die Komponente (A) mindestens eine Einheit, ausgewählt aus der Gruppe bestehend aus $-NH-(CH_2)_6-NH-$ Einheiten, $-CO-(CH_2)_5-NH-$Einheiten und $-CO-(CH_2)_4-CO-$ Einheiten.

Enthält die Komponente (A) mindestens eine Einheit, ausgewählt aus der Gruppe bestehend aus $-CO-(CH_2)_n-NH-$ Einheiten, dann leiten sich diese Einheiten von Lactamen mit 5 bis 9 Ringgliedern, bevorzugt von Lactamen mit 6 bis 8 Ringgliedern, insbesondere bevorzugt von Lactamen mit 7 Ringgliedern ab.

Lactame sind dem Fachmann bekannt. Unter Lactamen werden erfindungsgemäß im Allgemeinen zyklische Amide verstanden. Diese weisen im Ring erfindungsgemäß 4 bis 8 Kohlenstoffatome, bevorzugt 5 bis 7 Kohlenstoffatome und insbesondere bevorzugt 6 Kohlenstoffatome auf.

Beispielsweise sind die Lactame ausgewählt aus der Gruppe bestehend aus Butyro-4-lactam (γ-Lactam, γ-Butyrolactam), 2-Piperidinon (δ-Lactam; δ-Valerolactam), Hexano-6-lactam (ε-Lactam; ε-Caprolactam), Heptano-7-lactam (ζ-Lactam; ζ-Heptanolactam) und Octano-8-lactam (η-Lactam; η-Octanolactam).

Bevorzugt sind die Lactame ausgewählt aus der Gruppe bestehend aus 2-Piperidinon (δ-Lactam; δ-Valerolactam), Hexano-6-lactam (ε-Lactam; ε-Caprolactam) und Heptano-7-lactam (ζ-Lactam; ζ-Heptanolactam). Insbesondere bevorzugt ist ε-Caprolactam.

Enthält die Komponente (A) mindestens eine Einheit, ausgewählt aus der Gruppe bestehend aus $-NH-(CH_2)_m-NH-$ Einheiten, so leiten sich diese Einheiten von Diaminen ab. Die Komponente (A) wird dann also erhalten durch Umsetzung von Diaminen, vorzugsweise durch Umsetzung von Diaminen mit Dicarbonsäuren.

Geeignete Diamine enthalten 4 bis 8 Kohlenstoffatome, bevorzugt 5 bis 7 Kohlenstoffatome und insbesondere bevorzugt 6 Kohlenstoffatome.

Derartige Diamine sind beispielsweise ausgewählt aus der Gruppe bestehend aus 1,4-Diaminobutan (Butan-1,4-diamin; Tetramethylendiamin; Putrescin), 1,5-Diaminopentan (Pentamethylendiamin; Pentan-1,5-diamin; Cadaverin), 1,6-Diaminohexan (Hexamethylendiamin; Hexan-1,6-diamin), 1,7-Diaminoheptan und 1,8-Diaminooctan. Bevorzugt sind die Diamine ausgewählt aus der Gruppe bestehend aus 1,5-Diaminopentan, 1,6-Diaminohexan und 1,7-Diaminoheptan. Insbesondere bevorzugt ist 1,6-Diaminohexan.

Enthält die Komponente (A) mindestens eine Einheit, ausgewählt aus der Gruppe bestehend aus $-CO-(CH_2)_o-CO-$ Einheiten, dann sind diese Einheiten üblicherweise abgeleitet von Dicarbonsäuren. Die Komponente (A) wurde dann also durch Umsetzung von Dicarbonsäuren, vorzugsweise durch Umsetzung von Dicarbonsäuren mit Diaminen, erhalten.

Die Dicarbonsäuren enthalten dann 4 bis 8 Kohlenstoffatome, bevorzugt 5 bis 7 Kohlenstoffatome und insbesondere bevorzugt 6 Kohlenstoffatome.

Diese Dicarbonsäuren sind beispielsweise ausgewählt aus der Gruppe bestehend aus Butandisäure (Bernsteinsäure), Pentandisäure (Glutarsäure), Hexandisäure (Adipinsäure), Heptandisäure (Pimelinsäure) und Octandisäure (Korksäure, Suberinsäure). Bevorzugt sind die Dicarbonsäuren ausgewählt aus der Gruppe bestehend aus Pentandisäure, Hexandisäure und Heptandisäure, insbesondere bevorzugt ist Hexandisäure.

Die Komponente (A) kann darüber hinaus noch weitere Einheiten enthalten. Beispielsweise Einheiten, die sich von Lactamen mit 10 bis 13 Ringgliedern, wie Capryllactam und/oder Laurinlactam, ableiten.

Darüber hinaus kann die Komponente (A) Einheiten enthalten, die von Dicarbonsäurealkanen (aliphatischen Dicarbonsäuren) mit 9 bis 36 Kohlenstoffatomen, bevorzugt 9 bis 12 Kohlenstoffatomen, und besonders bevorzugt 9 bis 10 Kohlenstoffatomen abgeleitet sind. Darüber hinaus sind aromatische Dicarbonsäuren geeignet.

Beispielhaft seien hier Azelainsäure, Sebacinsäure, Dodecandisäure sowie Terephthalsäure und/oder Isophtalsäure als Dicarbonsäuren genannt.

Außerdem kann die Komponente (A) beispielsweise Einheiten enthalten, die abgeleitet sind von m-Xylylendiamin, Di-(4-aminophenyl)methan, Di-(4-aminocyclohexyl)-methan, 2,2-Di-(4-aminophenyl)-propan und 2,2-Di-(4-aminocyclohexyl)-propan und/oder 1,5-Diamino-2-methyl-pentan.

Die nachfolgende, nicht abschließende Aufstellung, enthält die bevorzugten Komponenten (A) für den Einsatz im erfindungsgemäßen Sinterpulver (SP) sowie die enthaltenen Monomere.

AB-Polymere:

| | |
|---|---|
| PA 4 | Pyrrolidon |
| PA 6 | ε-Caprolactam |
| PA 7 | Enantholactam |
| PA 8 | Capryllactam |

AA/BB-Polymere:

| | |
|---|---|
| PA 46 | Tetramethylendiamin, Adipinsäure |
| PA 66 | Hexamethylendiamin, Adipinsäure |
| PA 69 | Hexamethlyendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 6T | Hexamethylendiamin, Terephthalsäure |
| PA MXD6 | m-Xylyendiamin, Adipinsäure |

| | |
|---|---|
| PA 6/6I | (siehe PA 6), Hexamethylendiamin, Isophthalsäure |
| PA 6/6T | (siehe PA 6 und PA 6T) |
| PA 6/66 | (siehe PA 6 und PA 66) |
| PA 6/12 | (siehe PA 6), Lauryllactam |
| PA 66/6/610 | (siehe PA 66, PA 6 und PA 610) |
| PA 6I/6T/PACM | wie PA 6I/6T und Diaminodicyclohexylmethan |
| PA 6/6I6T | (siehe PA 6 und PA 6T), Hexamethylendiamin, Isophthalsäure |

Bevorzugt ist die Komponente (A) daher ausgewählt aus der Gruppe bestehend aus PA 6, PA 6.6, PA 6.10, PA 6.12, PA 6.36, PA 6/6.6, PA 6/6I6T, PA 6/6T und PA 6/6I.

Insbesondere bevorzugt ist die Komponente (A) ausgewählt aus der Gruppe bestehend aus PA 6, PA 6.10, PA 6.6/6, PA 6/6T und PA 6.6. Mehr bevorzugt ist die Komponente (A) ausgewählt aus der Gruppe bestehend aus PA 6 und PA 6/6.6. Am meisten bevorzugt ist die Komponente (A) PA 6.

Gegenstand der vorliegenden Erfindung ist daher auch ein Verfahren, bei dem die Komponente (A) ausgewählt ist aus der Gruppe bestehend aus PA 6, PA 6.6, PA 6.10, PA 6.12, PA 6.36, PA 6/6.6, PA 6/6I6T, PA 6/6T und PA 6/6I.

Die Komponente (A) weist im Allgemeinen eine Viskositätszahl von 70 bis 350 ml/g, vorzugsweise von 70 bis 240 ml/g auf. Die Bestimmung der Viskositätszahl erfolgt erfindungsgemäß aus einer 0,5 Gew.-%igen Lösung der Komponente (A) und in 96 Gew.-%iger Schwefelsäure bei 25 °C gemäß ISO 307.

Die Komponente (A) weist vorzugsweise ein gewichtsmittleres Molekulargewicht ($M_W$) im Bereich von 500 bis 2 000 000 g/mol, besonders bevorzugt im Bereich von 5 000 bis 500 000 g/mol und insbesondere bevorzugt im Bereich von 10 000 bis 100 000 g/mol, auf. Das gewichtsmittlere Molekulargewicht ($M_W$) wird bestimmt gemäß ASTM D4001.

Die Komponente (A) weist üblicherweise eine Schmelztemperatur ($T_M$) auf. Die Schmelztemperatur ($T_M$) der Komponente (A) liegt beispielsweise im Bereich von 70 bis 300 °C und bevorzugt im Bereich von 220 bis 295 °C. Die Schmelztemperatur ($T_M$) der Komponente (A) wird wie vorstehend für die Schmelztemperatur ($T_M$) des Sinterpulvers (SP) beschrieben mittels dynamischer Differenzkalorimetrie bestimmt.

Die Komponente (A) weist außerdem üblicherweise eine Glasübergangstemperatur ($T_G$) auf. Die Glasübergangstemperatur ($T_G$) der Komponente (A) liegt beispielsweise im Bereich von 0 bis 110 °C und bevorzugt im Bereich von 40 bis 105 °C.

Die Glasübergangstemperatur ($T_G$) der Komponente (A) wird mittels dynamischer Differenzkalorimetrie bestimmt. Zur Bestimmung werden erfindungsgemäß zunächst ein erster Heizlauf (H1), dann ein Kühllauf (K) und anschließend ein zweiter Heizlauf (H2) einer Probe der Komponente (A) (Einwaage ca. 8,5 g) gemessen. Die Heizrate beim ersten Heizlauf (H1) und beim zweiten Heizlauf (H2) beträgt 20 K/min, die Kühlrate beim Kühllauf (K) beträgt ebenfalls 20 K/min. Im Bereich des Glasübergangs der Komponente (A) wird im zweiten Heizlauf (H2) des DSC-Diagramms eine Stufe erhalten. Die Glasüberganstemperatur ($T_G$) der Komponente (A) entspricht der Temperatur bei halber Stufenhöhe im DSC-Diagramm. Dieses Verfahren zur Bestimmung der Glasübergangstemperatur ist dem Fachmann bekannt.

Komponente (B)

Erfindungsgemäß ist die Komponente (B) mindestens ein Polyamid 6I/6T.

"Mindestens ein Polyamid 6I/6T" bedeutet im Rahmen der vorliegenden Erfindung sowohl genau ein Polyamid 6I/6T als auch eine Mischung aus zwei oder mehreren Polyamiden 6I/6T.

Polyamid 6I/6T ist ein Copolymer aus Polyamid 6I und Polyamid 6T.

Bevorzugt besteht die Komponente (B) aus Einheiten, die von Hexamethylendiamin, von Terephthalsäure und von Isophthalsäure abgeleitet sind.

Anders ausgedrückt ist die Komponente (B) also bevorzugt ein Copolymer, das hergestellt ist ausgehend von Hexamethylendiamin, Terephthalsäure und Isophthalsäure.

Die Komponente (B) ist bevorzugt ein statistisches Copolymer.

Das als Komponente (B) eingesetzte mindestens eine Polyamid 6I/6T kann beliebige Anteile an 6I- und an 6T-Baueinheiten enthalten. Bevorzugt liegt das molare Verhältnis von 6I-Baueinheiten zu 6T-Baueinheiten im Bereich von 1 zu 1 bis 3 zu 1, besonders bevorzugt im Bereich von 1,5 zu 1 bis 2,5 zu 1 und insbesondere bevorzugt im Bereich von 1,8 zu 1 bis 2,3 zu 1.

Die Komponente (B) ist ein amorphes Copolyamid.

"Amorph" bedeutet im Rahmen der vorliegenden Erfindung, dass die reine Komponente (B) bei der dynamischen Differenzkalometrie *(differential scanning calorimetry; DSC)* gemessen gemäß ISO 11357 keinen Schmelzpunkt aufweist.

Die Komponente (B) weist eine Glasübergangstemperatur ($T_G$) auf. Die Glasübergangstemperatur ($T_G$) der Komponente (B) liegt üblicherweise im Bereich von 100 bis150 °C, bevorzugt im Bereich von 115 bis 135 °C und insbesondere bevorzugt im Bereich von 120 bis 130 °C. Die Bestimmung der Glasübergangstemperatur ($T_G$) der Komponente (B) erfolgt mittels dynamischer Differenzkalorimetrie wie vorstehend für die Bestimmung der Glasübergangstemperatur ($T_G$) der Komponente (A) beschrieben.

Die MVR (275 °C / 5 kg) (Schmelze-Volumenfließrate; Melt Volume-flow Rate, MVR) liegt bevorzugt im Bereich von 50 ml/10 min bis 150 ml/10 min, besonders bevorzugt im Bereich von 95 ml/10 min bis 105 ml/10 min.

Die Nullviskosität $\eta_0$ (Zero shear rate viscosity) der Komponente (B) liegt beispielsweise im Bereich von 770 bis 3250 Pas. Die Nullviskosität $\eta_0$ (Zero shear rate viscosity) wird bestimmt mit einem Rotationsviskosimeter "DHR-1" der Firma TA Instruments und einer Platte-Platte-Geometrie mit einem Durchmesser von 25 mm und einem Spaltabstand von 1 mm. Es werden ungetemperte Proben der Komponente (B) für 7 Tage bei 80 °C unter Vakuum getrocknet und diese dann mit zeitabhängigem Frequenzsweep (Sequenztest) mit einem Kreisfrequenzbereich von 500 bis 0,5 rad/s gemessen. Es werden folgende weitere Messparameter verwendet: Deformation: 1,0 %, Messtemperatur: 240 °C, Messzeit: 20 min, Vorheizzeit nach Probenpräparation: 1,5 min.

Die Komponente (B) weist eine Aminoendgruppenkonzentration (AEG) auf, die bevorzugt im Bereich von 30 bis 45 mmol/kg und insbesondere bevorzugt im Bereich von 35 bis 42 mmol/kg liegt.

Zur Bestimmung der Aminoendgruppenkonzentration (AEG) wird 1 g der Komponente (B) in 30 ml eines Phenol/Methanol-Gemischs (Volumenverhältnis Phenol : Methanol 75:25) gelöst und anschließend mit 0,2 N Salzsäure in Wasser potentiometrisch titriert.

Die Komponente (B) weist eine Carboxylendgruppenkonzentration (CEG) auf, die bevorzugt im Bereich von 60 bis 155 mmol/kg und insbesondere bevorzugt im Bereich von 80 bis 135 mmol/kg liegt.

Zur Bestimmung der Carboxylendgruppenkonzentration (CEG) wird 1 g der Komponente (B) in 30 ml Benzylalkohol aufgelöst. Anschließend wird bei 120 °C mit 0,05 N Kalilauge in Wasser visuell titriert.

Komponente (C)

Erfindungsgemäß ist die Komponente (C) mindestens ein Polyarylether.

"Mindestens ein Polyarylether" bedeutet im Rahmen der vorliegenden Erfindung sowohl genau ein Polyarylether als auch eine Mischung aus zwei oder mehreren Polyarylethern.

Polyarylether sind dem Fachmann als Polymerklasse bekannt.

Die Komponente (C) ist ein Polyarylether, der Bausteine der allgemeinen Formel (I) enthält:

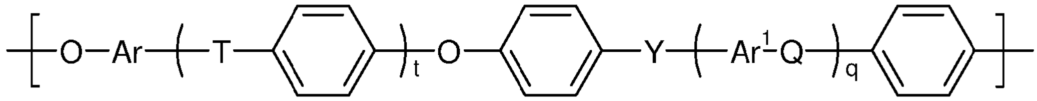

(I),

wobei die Symbole t, q, Q, T, Y, Ar und $Ar^1$ folgende Bedeutungen aufweisen:

t, q: unabhängig voneinander 0, 1, 2 oder 3,

Q, T, Y: unabhängig voneinander jeweils eine chemische Bindung oder Gruppe, ausgewählt aus -O-, -S-, $-SO_2-$, S=O, C=O, -N=N- und $-CR^aR^b-$, wobei $R^a$ und $R^b$ unabhängig voneinander jeweils für ein Wasserstoffatom oder eine $C_1$-$C_{12}$-Alkyl-, $C_1$-$C_{12}$-Alkoxy- oder $C_6$-$C_{18}$-Arylgruppe stehen, und wobei wenigstens eines aus Q, T und Y für $-SO_2-$ steht und

Ar, $Ar^1$: unabhängig voneinander eine Arylengruppe mit von 6 bis 18 Kohlenstoffatomen.

Gegenstand der vorliegenden Erfindung ist daher auch ein Verfahren, bei dem die Komponente (C) ein Polyarylether, der Bausteine der allgemeinen Formel (I) enthält, ist

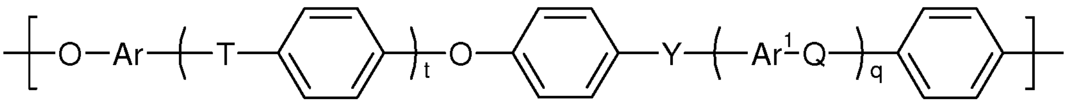

(I)

mit folgenden Bedeutungen:

t, q: unabhängig voneinander 0, 1, 2 oder 3,

Q, T, Y: unabhängig voneinander jeweils eine chemische Bindung oder Gruppe, ausgewählt aus -O-, -S-, $-SO_2-$, S=O, C=O, -N=N- und $-CR^aR^b-$, wobei $R^a$ und $R^b$ unabhängig voneinander jeweils für ein Wasserstoffatom oder eine $C_1$-$C_{12}$-Alkyl-, $C_1$-$C_{12}$-Alkoxy- oder $C_6$-$C_{18}$-Arylgruppe stehen und wobei wenigstens eines aus Q, T und Y für $-SO_2-$ steht und

Ar, $Ar^1$: unabhängig voneinander eine Arylengruppe mit von 6 bis 18 Kohlenstoffatomen.

Falls Q, T oder Y unter den oben genannten Voraussetzungen eine chemische Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel (I) allerdings unabhängig voneinander ausgewählt aus -O- und $-SO_2-$, mit der Maßgabe, dass wenigstens eines aus der Gruppe bestehend aus Q, T und Y für $-SO_2-$ steht. Diese Polyarylether sind Polyarylethersulfone.

Gegenstand der vorliegenden Erfindung ist somit auch ein Verfahren, bei dem die Komponente (C) ein Polyarylethersulfon ist.

Sofern Q, T oder Y-$CR^aR^b$- sind, stehen $R^a$ und $R^b$ unabhängig voneinander jeweils für ein Wasserstoffatom oder eine $C_1$-$C_{12}$-Alkyl-, $C_1$-$C_{12}$-Alkoxy- oder $C_6$-$C_{18}$-Arylgruppe.

Bevorzugte $C_1$-$C_{12}$-Alkylgruppen umfassen lineare und verzweigte, gesättigte Alkylgruppen mit von 1 bis 12 Kohlenstoffatomen. Insbesondere sind folgende Reste zu nennen: $C_1$-$C_6$-Alkylrest, wie Methyl, Ethyl, n-Propyl, i-Propyl, n-Butyl, sek-Butyl, 2- oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren $C_1$-$C_{12}$-Alkoxygruppen kommen die weiter oben definierten Alkylgruppen mit von 1 bis 12 Kohlenstoffatomen in Betracht. Vorzugsweise verwendbare Cycloalkylreste umfassen insbesondere $C_3$-$C_{12}$-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclpentylethyl, -propyl, -butyl, -pentyl, -hexyl, Cyclohexylmethyl, -dimethyl, und -trimethyl.

Ar und $Ar^1$ bedeuten unabhängig voneinander eine $C_6$-$C_{18}$-Arylengruppe. Ar ist vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist $Ar^1$ eine unsubstituierte $C_6$- oder $C_{12}$-Arylengruppe.

Als $C_6$-$C_{18}$-Arylengruppen Ar und $Ar^1$ kommen insbesondere Phenylengruppen, wie 1,2-, 1,3- und 1,4-Phenylen, Naphthylengruppen, wie beispielsweise 1,6-, 1,7-, 2,6- und 2,7-Naphthylen, sowie die von Anthracen, Phenanthren

und Naphthacen abgeleiteten Arylengruppen in Betracht.

Vorzugsweise werden Ar und $Ar^1$ in der bevorzugten Ausführungsform gemäß Formel (I) unabhängig voneinander ausgewählt aus der Gruppe bestehend aus 1,4-Phenylen, 1,3-Phenylen, Naphthylen, insbesondere 2,7-Dihydroxynaphthylen, und 4,4'-Bisphenylen.

Bevorzugte Polyarylether sind solche, die mindestens eine der folgenden Bausteine Ia bis Io als wiederkehrende Struktureinheiten enthalten:

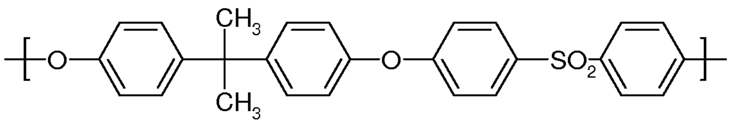 Ia

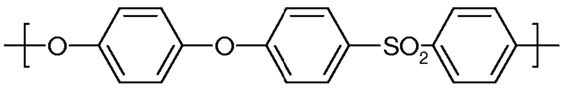 Ib

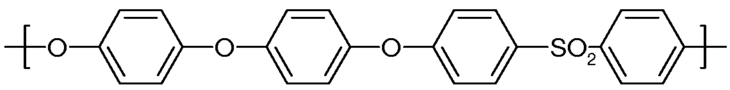 Ic

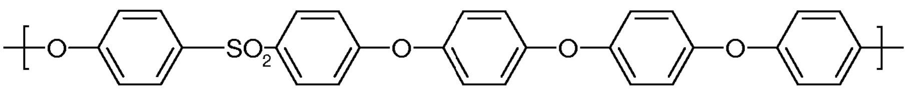 Ie

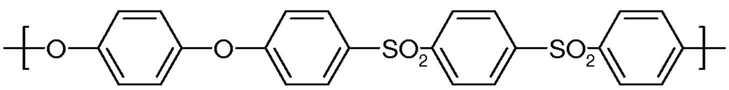 If

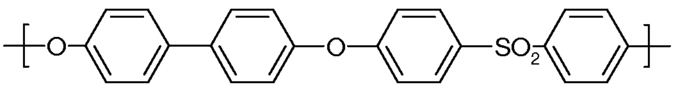 Ig

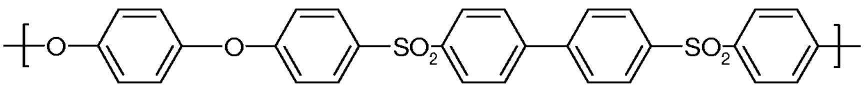 Ih

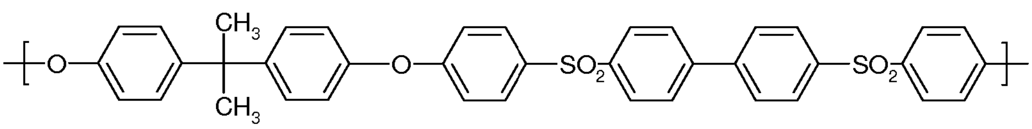 Ii

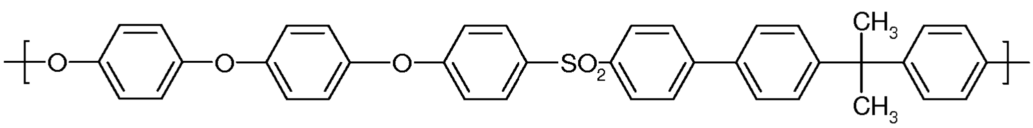 Ij

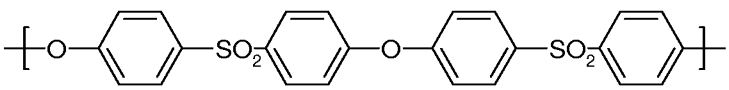 Ik

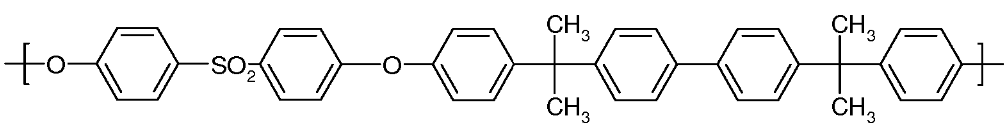 I l

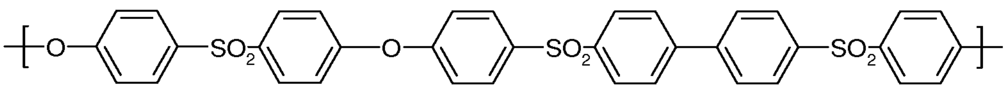 Im

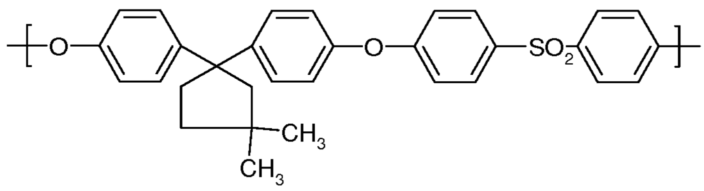

In

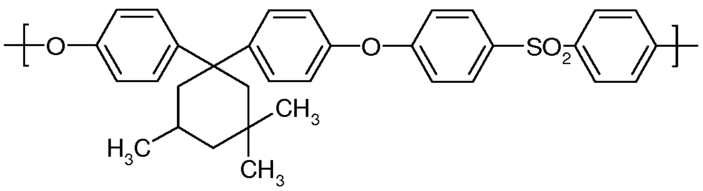

Io

Zusätzlich zu den bevorzugten Bausteinen Ia bis Io sind auch solche Bausteine bevorzugt, in denen eine oder mehrere 1,4-Phenyleneinheiten, die von Hydrochinon abstammen, durch 1,3-Phenyleneinheiten, die von Resorcin abstammen, oder durch Naphthyleneinheiten, die von Dihydroxynaphthalin abstammen, ersetzt sind.

Als Bausteine der allgemeinen Formel (I) besonders bevorzugt sind die Bausteine Ia, Ig und Ik. Es ist außerdem besonders bevorzugt, wenn die Komponente (C) im Wesentlichen aus einer Sorte Bausteine der allgemeinen Formel (I), insbesondere aus einem Baustein ausgewählt aus Ia, Ig und Ik aufgebaut ist.

In einer besonders bevorzugten Ausführungsform ist Ar = 1,4-Phenylen, t = 1, q = 0, T ist eine chemische Bindung und Y = $SO_2$. Aus der vorgenannten Wiederholungseinheit aufgebaute besonders bevorzugte Polyarylethersulfone werden als Polyphenylensulfon (PPSU) bezeichnet (Formel Ig).

In einer weiteren besonders bevorzugten Ausführungsform ist Ar = 1,4-Phenylen, t = 1, q = 0, T = $C(CH_3)_2$ und Y = $SO_2$. Aus der vorgenannten Wiederholungseinheit aufgebaute besonders bevorzugte Polyarylethersulfone werden als Polysulfon (PSU) bezeichnet (Formel Ia).

In einer weiteren besonders bevorzugten Ausführungsform ist Ar = 1,4-Phenylen, t = 1, q = 0, T = Y = $SO_2$. Aus der vorgenannten Wiederholungseinheit aufgebaute besonders bevorzugte Polyarylethersulfone werden als Polyethersulfon (PESU) bezeichnet (Formel Ik).

Bevorzugt ist die Komponente (C) daher ausgewählt aus der Gruppe bestehend aus PSU, PESU und PPSU.

Gegenstand der vorliegenden Erfindung ist daher auch ein Verfahren, bei dem die Komponente (C) ausgewählt ist aus der Gruppe bestehend aus PSU, PESU und PPSU.

Abkürzungen wie PPSU, PSU und PESU entsprechen im Rahmen der vorliegenden Erfindung der DIN EN ISO 1043-1 (Kunststoffe - Kennbuchstaben und Kurzzeichen - Teil 1: Basis-Polymere und ihre besonderen Eigenschaften (ISO 1043-1:2001); Deutsche Fassung EN ISO 1043-1:2002).

Die Komponente (C) weist vorzugsweise ein gewichtsmittleres Molekulargewicht $M_w$ von 10 000 bis 150 000 g/mol, insbesondere von 15 000 bis 120 000 g/mol, besonders bevorzugt von 18 000 bis 100 000 g/mol auf, bestimmt mittels Gelpermeationschromatographie im Lösungsmittel Dimethylacetamid gegen engverteiltes Polymethylmethacrylat als Standard.

Die Komponente (C) weist vorzugsweise ein zahlenmittleres Molekulargewicht $M_n$ von 10 000 bis 35 000 g/mol auf, bestimmt mittels Gelpermeationschromatographie im Lösungsmittel Dimethylacetamid gegen engverteiltes Polymethylmethacrylat als Standard.

Die Polydispersität beträgt bevorzugt von 1,9 bis 7,5, besonders bevorzugt von 2,1 bis 4.

Darüber hinaus weist die Komponente (C) in Reinsubstanz vorzugsweise eine scheinbare Schmelzviskosität bei 350 °C/1150 $s^{-1}$ von 100 bis 1 000 Pa s, bevorzugt von 150 bis 300 Pa s und insbesondere bevorzugt von 150 bis 275 Pa s auf.

Die Schmelzeviskosität wird mittels eines Kapillarrheometers bestimmt. Dabei wird die scheinbare Viskosität bei 350°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1150 $s^{-1}$ bestimmten Werte.

Die Glasübergangstemperatur $T_G$ des Polyarylethers liegt üblicherweise im Bereich von 160 bis 270 °C, bevorzugt im Bereich von 170 bis 250 °C und insbesondere bevorzugt im Bereich von 180 bis 230 °C, bestimmt durch dynamische Differenzkalorimetrie wie vorstehend beschrieben (differential calorimetry; DSC).

Unter der Glasübergangstemperatur $T_G$ wird die Temperatur verstanden, bei der die Komponente (C) beim Abkühlen zu einem glasartigen Feststoff erstarrt.

Die erfindungsgemäßen Polyarylether sind üblicherweise amorph. "Amorph" bedeutet im Rahmen der vorliegenden Erfindung, dass die Polyarylether keine Schmelztemperatur $T_M$ aufweisen. Sie weisen nur eine Glasübergangstemperatur $T_G$ auf. Bei der Glasübergangstemperatur $T_G$ geht der Polyarylether vom festen Zustand in den geschmolzenen Zustand über.

Gegenstand der vorliegenden Erfindung ist daher auch ein Verfahren, bei dem die Komponente (C) amorph ist.

Formkörper

Erfindungsgemäß wird durch das weiter oben beschriebene Verfahren des selektiven Lasersinterns ein Formkörper erhalten. Das bei der selektiven Belichtung mit dem Laser aufgeschmolzene Sinterpulver (SP) erstarrt nach der Belichtung wieder und bildet so den erfindungsgemäßen Formkörper. Der Formkörper kann direkt nach dem Erstarren des aufgeschmolzenen Sinterpulvers (SP) aus dem Pulverbett entnommen werden. Ebenso ist es möglich, den Formkörper erst abzukühlen und dann erst aus dem Pulverbett zu entnehmen. Gegebenenfalls anhaftende Partikel des Sinterpulvers (SP), das nicht aufgeschmolzen worden ist, können mechanisch nach bekannten Verfahren von der Oberfläche entfernt werden. Das Verfahren zur Oberflächenbehandlung des Formkörpers umfasst beispielsweise das Gleitschleifen oder Gleitspanen sowie Sandstrahlen, Glaskugelstrahlen oder Mikrostrahlen.

Es ist außerdem möglich, die erhaltenen Formkörper weiterzuverarbeiten oder beispielsweise die Oberflächen zu behandeln.

Der erfindungsgemäße Formkörper enthält beispielsweise im Bereich von 20 bis 90 Gew.-% der Komponente (A), im Bereich von 5 bis 40 Gew.-% der Komponente (B) und im Bereich von 5 bis 40 Gew.-% der Komponente (C), jeweils bezogen auf das Gesamtgewicht des Formkörpers.

Bevorzugt enthält der Formkörper im Bereich von 45 bis 80 Gew.-% der Komponente (A), im Bereich von 10 bis 25 Gew.-% der Komponente (B) und im Bereich von 10 bis 30 Gew.-% der Komponente (C), jeweils bezogen auf das Gesamtgewicht des Formkörpers.

Besonders bevorzugt enthält der Formkörper im Bereich von 53 bis 73 Gew.-% der Komponente (A), im Bereich von 12 bis 22 Gew.-% der Komponente (B) und im Bereich von 15 bis 25 Gew.-% der Komponente (C), jeweils bezogen auf das Gesamtgewicht des Formkörpers.

Erfindungsgemäß handelt es sich bei der Komponente (A) um die Komponente (A), die im Sinterpulver (SP) enthalten war. Ebenso handelt es sich bei der Komponente (B) um die Komponente (B), die im Sinterpulver (SP) enthalten war, und bei der Komponente (C) um die Komponente (C), die im Sinterpulver (SP) enthalten war.

Enthielt das Sinterpulver (SP) das zumindest eine Additiv, so enthält auch der erfindungsgemäß erhaltene Formkörper das zumindest eine Additiv.

Dem Fachmann ist klar, dass durch die Belichtung des Sinterpulvers (SP) mit dem Laser die Komponente (A), die Komponente (B), die Komponente (C) sowie gegebenenfalls das zumindest eine Additiv chemische Reaktionen eingehen können und sich dadurch verändern können. Derartige Reaktionen sind dem Fachmann bekannt.

Bevorzugt gehen die Komponente (A), die Komponente (B), die Komponente (C) sowie gegebenenfalls das zumindest eine Additiv durch die Belichtung des Sinterpulvers (SP) mit dem Laser keine chemische Reaktion ein, sondern das Sinterpulver (SP) schmilzt lediglich auf.

Gegenstand der vorliegenden Erfindung ist daher auch ein Formkörper erhältlich nach dem erfindungsgemäßen Verfahren.

Durch die Verwendung mindestens eines Polyarylethers in dem erfindungsgemäßen Sinterpulver (SP) wird das Sinterfenster ($W_{SP}$) des Sinterpulvers (SP) gegenüber dem Sinterfenster ($W_{AB}$) einer Mischung der Komponenten (A) und (B) verbreitert.

Gegenstand der vorliegenden Erfindung ist daher auch die Verwendung mindestens eines Polyarylethers in einem Sinterpulver (SP), das die Komponenten

(A) mindestens ein teilkristallines Polyamid enthaltend mindestens eine Einheit ausgewählt aus der Gruppe bestehend aus $-NH-(CH_2)_m-NH-$ Einheiten, wobei m 4, 5, 6, 7 oder 8 bedeutet, $-CO-(CH_2)_n-NH-$ Einheiten, wobei n 3, 4, 5, 6 oder 7 bedeutet, und $-CO-(CH_2)_o-CO-$ Einheiten, wobei o 2, 3, 4, 5 oder 6 bedeutet,

(B) mindestens ein Polyamid 6I/6T,

(C) mindestens einen Polyarylether

enthält, zur Verbreiterung des Sinterfensters ($W_{SP}$) des Sinterpulvers (SP) gegenüber dem Sinterfenster ($W_{AB}$), einer Mischung aus den Komponenten (A) und (B), wobei das Sinterfenster ($W_{SP}$; $W_{AB}$) jeweils die Differenz zwischen der Onset-Temperatur des Aufschmelzens ($T_M^{onset}$) und der Onset-Temperatur der Kristallisation ($T_C^{onset}$) ist.

Beispielsweise liegt das Sinterfenster ($W_{AB}$) einer Mischung der Komponenten (A) und (B) im Bereich von 15 bis 40 K (Kelvin), besonders bevorzugt im Bereich von 20 bis 35 K und insbesondere bevorzugt im Bereich von 20 bis 33 K.

Das Sinterfenster ($W_{SP}$) des Sinterpulvers (SP) verbreitert sich gegenüber dem Sinterfenster ($W_{AB}$) der Mischung der Komponenten (A) und (B) beispielsweise um 1 bis 8 K, bevorzugt um 1 bis 5 K und insbesondere bevorzugt um 1 bis 3 K.

Es versteht sich von selbst, dass das Sinterfenster ($W_{SP}$) des Sinterpulvers (SP) breiter ist als das Sinterfenster ($W_{AB}$) der Mischung der im Sinterpulver (SP) enthaltenen Komponenten (A) und (B).

Nachfolgend wird die Erfindung anhand von Beispielen näher erläutert, ohne sie hierauf zu beschränken.

Beispiele:

Es werden die folgenden Komponenten eingesetzt:

- Teilkristallines Polyamid (Komponente (A)):
  (P1) Polyamid 6 (Ultramid® B27, BASF SE)

- Amorphes Polyamid (Komponente (B)):
  (AP1) Polyamid 6I/6T (Grivory G16, EMS), mit einem molaren Verhältnis von 6I : 6T von 1,9 : 1

- Amorphes Polymer (Komponente (C)):

  (HP1) Polysulfon (Ultrason S2010, BASF SE)
  (HP2) Styrene-N-Phenylmaleimide-Maleic anhydride Copolymer (Denka IP MS-NB, Denka)

- Additiv:

  (A1) Irganox 1098 (N,N'-hexane-1,6-diylbis(3-(3,5-di-tert.-butyl-4-hydroxyphenylpropionamide)), BASF SE)
  (A2) PolyHydroxy Ether - Thermoplastic - Thermoset Resin (Phenoxy Resin, InChem)

In Tabelle 1 sind wesentliche Parameter der eingesetzten teilkristallinen Polyamide (Komponente (A)) angegeben, in Tabelle 2 sind wesentliche Parameter der eingesetzten amorphen Polyamide (Komponente (B)) angegeben und in Tabelle 3 sind wesentliche Parameter der eingesetzten amorphen Polymere (Komponente (C)) angegeben.

Tabelle 1

| | Typ | AEG [mmol/kg] | CEG [mmol/kg] | $T_M$[°C] | $T_G$[°C] | Nullviskosität $\eta_0$ bei 240 °C [Pas] |
|---|---|---|---|---|---|---|
| P1 | PA 6 | 36 | 54 | 220,0 | 53 | 399 |

Tabelle 2

| | Typ | AEG [mmol/kg] | CEG [mmol/kg] | $T_G$[°C] | Nullviskosität $\eta_0$ bei 240 °C [Pas] |
|---|---|---|---|---|---|
| AP1 | PA 6I/6T | 37 | 86 | 125 | 770 |

Tabelle 3

| | Typ | $T_G$ [°C] | Dichte $\rho$ [g/cm$^3$] | Viskositätszahl VZ [ml/g] | Schmelzindex MVR [g/10 min] |
|---|---|---|---|---|---|
| HP1 | Polysulfon | 185 | 1,234 | 63 | 90 (360 °C, 10 kg) |
| HP2 | Styrene-N-PhenylmaleimideMal eic anhydride Copolymer | 196 | 1,18 | | 3 (265 °C, 10 kg) |

AEG gibt die Aminoendgruppenkonzentration an. Diese wird bestimmt mittels Titration. Zur Bestimmung der Aminoendgruppenkonzentration (AEG) wurden 1 g der Komponente (teilkristallines Polyamid oder amorphes Polyamid) in 30 ml eines Phenol/Methanol-Gemischs (Volumenverhältnis Phenol : Methanol 75:25) gelöst und anschließend mit 0,2 N Salzsäure in Wasser potentiometrisch titriert.

Die CEG gibt die Carboxylendgruppenkonzentration an. Diese wird bestimmt mittels Titration. Zur Bestimmung

der Carboxylendgruppenkonzentration (CEG) wurden 1 g der Komponente (teilkristallines Polyamid oder amorphes Polyamid) in 30 ml Benzylalkohol aufgelöst. Anschließend wurde bei 120 °C mit 0,05 N Kalilauge in Wasser visuell titriert.

Die Schmelztemperatur ($T_M$) der teilkristallinen Polyamide sowie sämtliche Glasübergangstemperaturen ($T_G$) wurden jeweils mittels dynamischer Differenzkalorimetrie bestimmt.

Zur Bestimmung der Schmelztemperatur ($T_M$) wurde wie vorstehend beschrieben ein erster Heizlauf (H1) mit einer Heizrate von 20 K/min gemessen. Die Schmelztemperatur ($T_M$) entsprach dann der Temperatur am Maximum des Aufschmelzpeaks des Heizlaufs (H1).

Zur Bestimmung der Glasübergangstemperatur ($T_G$) wurde im Anschluss an den ersten Heizlauf (H1) ein Kühllauf (K) und daran anschließend ein zweiter Heizlauf (H2) gemessen. Der Kühllauf wurde mit einer Kühlrate von 20 K/min gemessen, der erste Heizlauf (H1) und der zweite Heizlauf (H2) wurden mit einer Heizrate von 20 K/min gemessen. Die Glasübergangstemperatur ($T_G$) wurde dann wie vorstehend beschrieben auf halber Höhe der Stufe des zweiten Heizlaufs (H2) bestimmt.

Die Nullviskosität $\eta_0$ (Zero shear rate viscosity) wurde bestimmt mit einem Rotationsviskosimeter "DHR-1" der Firma TA Instruments und einer Platte-Platte-Geometrie mit einem Durchmesser von 25 mm und einem Spaltabstand von 1 mm. Es wurden ungetemperte Proben für 7 Tage bei 80 °C unter Vakuum getrocknet und diese dann mit zeitabhängigem Frequenzsweep (Sequenztest) mit einem Kreisfrequenzbereich von 500 bis 0,5 rad/s gemessen. Es wurden folgende weitere Messparameter verwendet: Deformation: 1,0 %, Messtemperatur: 240 °C, Messzeit: 20 min, Vorheizzeit nach Probenpräparation: 1,5 min.

Die Dichte wurde gemäß DIN EN ISO 1183-1:2013 bestimmt.

Die Bestimmung des Schmelzindex MVR (Melt Volume-flow Rate) erfolgte gemäß DIN EN ISO 1133-1:2011.

Die Viskositätszahl wurde gemäß ISO 307, 1157, 1628 ermittelt.

Blends enthaltend ein einzelnes amorphes Polymer

Zur Herstellung von Blends wurden die in Tabelle 4 angegebenen Komponenten in den in Tabelle 4 angegebenen Verhältnissen in einem DSM 15 $cm^3$ Miniextruder (DSM-Micro15-Microcompounder) mit einer Drehzahl von 80 U/min (Umdrehungen pro Minute) bei 260 °C für 3 min (Minuten) Mischzeit compoundiert und anschließend extrudiert. Die erhaltenen Extrudate wurden anschließend in einer Mühle vermahlen und auf eine Partikelgröße von < 200 µm gesiebt.

Die erhaltenen Blends wurden charakterisiert. Die Ergebnisse sind in Tabelle 5 zu sehen.

Tabelle 4

| Beispiel | (P1) [Gew.-%] | (AP1) [Gew.-%] | (HP1) [Gew.-%] | (A1) [Gew.-%] | (A2) [Gew.-%] | (A3) [Gew.-%] |
|---|---|---|---|---|---|---|
| V1 | 100 | | | | | |
| V2 | 79 | 21 | | | | |
| V3 | 78,6 | 21 | | 0.4 | | |
| V4 | 79,6 | | 18 | 0,4 | 2 | |

Tabelle 5

| Beispiel | Betrag der komplexen Viskosität bei 0,5 rad/s, 240 °C [Pas] | Verhältnis Viskosität nach Alterung zu vor Alterung | $T_M$ [°C] | $T_C$ [°C] | Sinterfenster W [K] | Sinterfenster W nach Alterung [K] |
|---|---|---|---|---|---|---|
| V1 | 370 | 0,11 | 219,7 | 187,8 | 16,7 | 11,2 |
| V2 | 483 | 0,39 | 219,5 | 173,2 | 24,5 | 23,9 |
| V3 | 569 | 5,75 | 217,7 | 175,8 | 25,8 | 27,9 |
| V4 | 740 | 1,18 | 219,1 | 187,3 | 18,1 | 15,3 |

Die Schmelztemperatur ($T_M$) wurde wie vorstehend beschrieben bestimmt.

Die Kristallisationstempertur ($T_C$) wurde mittels dynamischer Differenzkalorimetrie bestimmt. Dazu wurden zunächst ein Heizlauf (H) mit einer Heizrate von 20 K/min und anschließend ein Kühllauf (K) mit einer Kühlrate von 20

K/min gemessen. Die Kristallisationstemperatur ($T_C$) ist die Temperatur am Extremum des Kristallisationspeaks.

Der Betrag der komplexen Viskosität in Scherung (complex shear viscosity) wurde bestimmt mittels Platte-Platte Rotationsrheometer bei einer Kreisfrequenz von 0,5 rad/s und einer Temperatur von 240 °C. Es wurde ein Rotationsviskosimeter "DHR-1" der Firma TA Instruments verwendet, wobei der Durchmesser 25 mm und der Spaltabstand 1 mm betrug. Es wurden ungetemperte Proben für 7 Tage bei 80 °C unter Vakuum getrocknet und diese dann mit zeitabhängigem Frequenzsweep (Sequenztest) mit einem Kreisfrequenzbereich von 500 bis 0,5 rad/s gemessen. Es wurden folgende weitere Messparameter verwendet: Deformation: 1,0 %, Messzeit: 20 min, Vorheizzeit nach Probenpräparation: 1,5 min.

Das Sinterfenster (W) wurde wie vorstehend beschrieben als Differenz aus der Onset-Temperatur des Aufschmelzens ($T_M^{onset}$) und der Onset-Temperatur der Kristallisation ($T_C^{onset}$) bestimmt.

Zur Bestimmung der thermooxidativen Stabilität der Blends wurde die komplexe Scherviskosität von frisch hergestellten Blends sowie von Blends nach Ofenlagerung bei 0,5 % Sauerstoff für 16 Stunden und 195 °C bestimmt. Es wurde das Verhältnis der Viskosität nach Lagerung (nach Alterung) zur Viskosität vor Lagerung (vor Alterung) bestimmt. Die Viskositätsmessung erfolgt mittels Rotationsrheologie bei einer Messfrequenz von 0,5 rad/s bei einer Temperatur von 240 °C.

Anhand der Beispiele in Tabelle 5 ist zu erkennen, dass durch die Verwendung von erfindungsgemäßen Komponenten (A), (B) und (C) in dem Blend, eine verbesserte thermische Stabilität erzielt wird gegenüber der reinen Komponente (A). Zudem wird insbesondere nach thermischer Lagerung ein verbreitertes Sinterfenster erzielt.

Sinterpulver für selektives Lasersintern

Zur Herstellung von Sinterpulvern wurden die in Tabelle 6 angegebenen Komponenten in dem in Tabelle 6 angegebenen Verhältnis in einem Zweischneckenextruder (MC26) mit einer Drehzahl von 300 U/min (Umdrehungen pro Minute) und einem Durchsatz von 10 kg/h bei einer Temperatur von 270 °C compoundiert mit einer anschließenden Stranggranulierung. Das so erhaltene Granulat wurde auf eine Partikelgröße von 20 bis 100 μm vermahlen.

Die erhaltenen Sinterpulver wurden wie vorstehend beschrieben charakterisiert. Die Ergebnisse sind in Tabelle 7 zu sehen.

Tabelle 6

| Beispiel | (P1) [Gew.-%] | (AP1) [Gew.-%] | (HP1) [Gew.-%] | (HP2) [Gew.-%] | (A1) [Gew.-%] | (A2) [Gew.-%] |
|---|---|---|---|---|---|---|
| V5 | 100 | | | | | |
| V6 | 79 | 21 | | | | |
| V7 | 78,5 | 21 | | | 0,5 | |
| B8 | 58,5 | 21 | 18 | | 0,5 | 2 |
| V9 | 58,5 | 21 | | 20 | 0,5 | |
| B10 | 60,5 | 21 | 18 | | 0,5 | |

Tabelle 7

| Beispiel | Betrag der komplexen Vikosität bei 0.5 rad/s, 240 °C [Pas] | Verhältnis Viskosität nach Alterung zu vor Alterung | $T_M$ [°C] | $T_C$ [°C] | $T_G$ [°C] | Sinterfenster W [K] | Sinterfenster W nach Alterung [K] | Sinterfensterverbreiterung ΔW gegenüber (V7) [K] | Sinterfensterverbreiterung ΔW gegenüber (V7) nach Alterung [K] |
|---|---|---|---|---|---|---|---|---|---|
| V5 | 370 | 0,11 | 219,7 | 187,8 | 53 | 16,7 | 11,2 | - | - |
| V6 | 637 | 0,25 | 217,9 | 173,4 | 66 | 24,1 | 23,9 | - | - |
| V7 | 692 | 2,92 | 217,8 | 170,2 | 66 | 28,2 | 26,8 | - | - |
| B8 | 1362 | 1,47 | 215,0 | 167 | 73 | 28,8 | 31,4 | 0,6 | 4,6 |
| V9 | 1551 | 1,21 | 215,7 | 166,7 | 70 | 29,4 | 31,5 | 1,2 | 4,7 |
| B10 | 1302 | 1,08 | 216,4 | 168,0 | 71 | 27,7 | 28,9 | -0,5 | 2,1 |

Die Sinterpulver der erfindungsgemäßen Beispiele B8 und B10 sowie des Vergleichsbeispiels V9 zeigen ein deutlich verbreitertes Sinterfenster nach Alterung. Ebenso ist die Alterungsstabilität, charakterisiert durch das Viskositätsverhältnis nach Alterung zu vor Alterung, deutlich verbessert gegenüber den Vergleichsbeispielen V5, V6 und V7. Wie weiter unten gezeigt, sind die Bruchdehnungseigenschaften von aus dem Sinterpulver gemäß Vergleichsbeispiel V9 hergestellten Formkörpern allerdings deutlich schlechter als die der aus den erfindungsgemäßen Sinterpulvern gemäß Beispielen B8 und B10 hergestellten Formkörper.

Lasersinterversuche

Das Sinterpulver wurde mit einer Schichtdicke von 0,12 mm in den Bauraum mit der in Tabelle 8 angegebenen Temperatur eingebracht. Anschließend wurde das Sinterpulver mit einem Laser mit der in Tabelle 8 angegebenen Laserleistung und dem angegebenen Punktabstand belichtet, wobei die Geschwindigkeit des Lasers über die Probe beim Belichten bei 5 m/s lag. Der Punktabstand wird auch als Laserabstand oder als Spurabstand bezeichnet. Beim selektiven Lasersintern erfolgt das Scannen üblicherweise in Streifen. Der Punktabstand gibt den Abstand zwischen den Mitten der Streifen, also zwischen den beiden Zentren des Laserstrahls zweier Streifen an.

Tabelle 8

| Beis piel | Temperatur [°C] | Laserleistung [W] | Lasergeschwindigke it [m/s] | Punktabstand [mm] |
|---|---|---|---|---|
| V5 | 209 | 18 | 5 | 0,2 |
| V6 | 195 | 20 | 5 | 0,2 |
| V7 | 200 | 25 | 5 | 0,2 |
| B8 | 195 | 25 | 5 | 0,2 |
| V9 | 195 | 25 | 5 | 0,2 |
| B10 | 198 | 25 | 5 | 0,2 |

Anschließend wurden die Eigenschaften der erhaltenen Zugstäbe (Sinterstäbe) bestimmt. Die Prüfung der erhaltenen Zugstäbe (Sinterstäbe) erfolgte im trockenen Zustand nach Trocknung bei 80 °C für 336 h im Vakuum. Die Ergebnisse sind in Tabelle 9 gezeigt. Ferner wurden Charpy-Stäbe hergestellt, die ebenfalls trocken geprüft wurden (nach ISO179-2/1eU: 1997 + Amd.1:2011).

Der Verzug der erhaltenen Sinterstäbe wurde bestimmt, indem der Sinterstab mit der konkaven Seite auf eine planare Fläche gelegt wurde. Anschließend wurde der Abstand ($a_m$) zwischen der planaren Fläche und dem oberen Rand der Mitte des Sinterstabes bestimmt. Zudem wurde die Dicke ($d_m$) in der Mitte des Sinterstabs bestimmt. Der Verzug in % bestimmt sich dann gemäß folgender Formel:

$$V=100 \bullet (a_m-d_m) / d_m$$

Die Dimension der Sinterstäbe lag üblicherweise bei 80 mm Länge, 10 mm Breite und 4 mm Dicke.

Die Biegefestigkeit entspricht der Maximalspannung im Biegeversuch. Der Biegeversuch ist ein Dreipunkt Biegeversuch nach EN ISO 178:2010 + A1:2013.

Die Prozessfähigkeit wurde qualitativ bewertet, wobei "2" "gut" bedeutet, also ein geringer Verzug des Bauteils und "5" "mangelhaft", also ein starker Verzug des Bauteils.

Die Zugfestigkeit, das Zug-E-Modul und die Bruchdehnung wurden gemäß ISO 527-1:2012 bestimmt.

Die Wasseraufnahme der erhaltenen Zugstäbe (Sinterstäbe) wurde bestimmt durch Wiegen der Zugstäbe im getrockneten Zustand (nach Lagerung für 336 Stunden bei 80 °C im Vakuum) und im konditionierten Zustand (nach Lagerung für 336 Stunden bei 70 °C und 62 % relativer Feuchte).

Tabelle 9

| Beispiel | Verzug Biegestab aus SLS [%] | Prozessfähig keit in SLS | Biegefestigkeit [MPa] | Zugfestigkeit [MPa] | Zug-E-Modul [MPa] | Bruchdehnung [%] | Charpy Schlagzähigkeit acu [kJ/m$^2$] | Charpy Kerb-schlagzähigkeit [kJ/m$^2$] | Wasseraufnahme [Gew.-%] |
|---|---|---|---|---|---|---|---|---|---|
| V5 | 45 - 55 | 4 | | | | | | | |
| V6 | Nicht bestimmt | 2 | | | | | | | |
| V7 | 52 ± 14 | 2 | 100 | 64 | 3600 | 1,9 | 5,0 | 1,5 | 2,7 |
| B8 | 32 ± 7 | 1 | 95 | 76 | 3300 | 2,8 | 7,6 | 1,65 | 1,9 |
| V9 | 30 ± 3 | 1 | 43 | 28,5 | 3100 | 0,9 | - | | |
| B10 | 0,4 ± 1,2 | 1 | - | 68,9 | 3500 | 2.5 | 8,1 | | |

Es ist zu erkennen, dass ein mit dem Sinterpulver gemäß Vergleichsbeispiel V9 hergestellter Formkörper zwar einen geringen Verzug aufweist, allerdings zeigt er auch nur eine sehr geringe Bruchdehnung.

Die aus dem erfindungsgemäßen Sinterpulver gemäß Beispiel B8 und B10 hergestellten Formkörper weisen einen verringerten Verzug zusammen mit einer erhöhten Bruchdehnung und Schlagzähigkeit auf.

Es ist zu erkennen, dass mit dem erfindungsgemäßen Sinterpulver (SP) hergestellte Formkörper eine geringere Wasseraufnahme von nur 1,9 Gew.-% erhalten wird. Theoretisch zu erwarten waren 2,16 Gew.-%, wobei der theoretischen Rechnung die Annahme zugrunde liegt, dass wenn das Sinterpulver (SP) 20 Gew.-% von Polyamiden verschiedene Komponenten, welche kein Wasser aufnehmen, enthält, das Sinterpulver 80 % der Wasseraufnahme eines Sinterpulvers, das ausschließlich Polyamid enthält (V7), zeigt.

**Patentansprüche**

1. Verfahren zur Herstellung eines Formkörpers durch selektives Lasersintern eines Sinterpulvers (SP), **dadurch gekennzeichnet, dass** das Sinterpulver (SP) die Komponenten

   (A) mindestens ein teilkristallines Polyamid enthaltend mindestens eine Einheit ausgewählt aus der Gruppe bestehend aus $-NH-(CH_2)_m-NH$-Einheiten, wobei m 4, 5, 6, 7 oder 8 bedeutet, $-CO-(CH_2)_n-NH$-Einheiten, wobei n 3, 4, 5, 6 oder 7 bedeutet, und $-CO-(CH_2)_o-CO$-Einheiten, wobei o 2, 3, 4, 5 oder 6 bedeutet,
   (B) mindestens ein Polyamid 6I/6T,
   (C) mindestens einen Polyarylether

   enthält, wobei
   die Komponente (C) ein Polyarylether, der Bausteine der allgemeinen Formel (I) enthält, ist

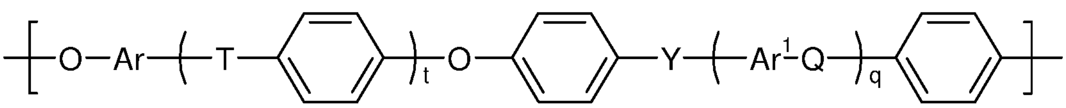

(I)

   mit folgenden Bedeutungen:

   t, q: unabhängig voneinander 0, 1, 2 oder 3,
   Q, T, Y: unabhängig voneinander jeweils eine chemische Bindung oder Gruppe, ausgewählt aus -O-, -S-, $-SO_2-$, S=O, C=O, -N=N- und $-CR^aR^b-$, wobei $R^a$ und $R^b$ unabhängig voneinander jeweils für ein Wasserstoffatom oder eine $C_1-C_{12}$-Alkyl-, $C_1-C_{12}$-Alkoxy- oder $C_6-C_{18}$-Arylgruppe stehen und wobei wenigstens eines aus Q, T und Y für $-SO_2-$ steht und
   Ar, $Ar^1$: unabhängig voneinander eine Arylengruppe mit von 6 bis 18 Kohlenstoffatomen, und wobei die Komponente (B) ein amorphes Copolyamid ist.

2. Verfahren gemäß Anspruch 1, **dadurch gekennzeichnet, dass** das Sinterpulver (SP) im Bereich von 20 bis 90 Gew.-% der Komponente (A), im Bereich von 5 bis 40 Gew.-% der Komponente (B) und im Bereich von 5 bis 40 Gew.-% der Komponente (C) enthält, jeweils bezogen auf die Summe der Gewichtsprozente der Komponenten (A), (B) und (C).

3. Verfahren gemäß Anspruch 1 oder 2, **dadurch gekennzeichnet, dass** das Sinterpulver (SP)
   einen D10-Wert im Bereich von 10 bis 30 μm,
   einen D50-Wert im Bereich von 25 bis 70 μm und
   einen D90-Wert im Bereich von 50 bis 150 μm
   aufweist, wobei zur Ermittlung der Partikelgrößen das Sinterpulver (SP) mittels Laserbeugung vermessen wird.

4. Verfahren gemäß einem der Ansprüche 1 bis 3, **dadurch gekennzeichnet, dass** das Sinterpulver (SP) eine Schmelztemperatur ($T_M$) im Bereich von 180 bis 270°C aufweist, wobei die Schmelztemperatur ($T_M$) mittels dynamischer Differenzkalorimetrie bestimmt wird.

5. Verfahren gemäß einem der Ansprüche 1 bis 4, **dadurch gekennzeichnet, dass** das Sinterpulver (SP) eine Kristallisationstemperatur ($T_C$) im Bereich von 120 bis 190°C aufweist, wobei die Kristallisationstemperatur ($T_C$) mittels

dynamischer Differenzkalorimetrie bestimmt wird.

6. Verfahren gemäß einem der Ansprüche 1 bis 5, **dadurch gekennzeichnet, dass** das Sinterpulver (SP) ein Sinterfenster ($W_{SP}$) aufweist, wobei das Sinterfenster ($W_{SP}$) die Differenz zwischen der Onset-Temperatur des Aufschmelzens ($T_M^{onset}$) und der Onset-Temperatur der Kristallisation ($T_C^{onset}$) ist und wobei das Sinterfenster ($W_{SP}$) im Bereich von 18 bis 45 K liegt.

7. Verfahren gemäß einem der Ansprüche 1 bis 6, **dadurch gekennzeichnet, dass** das Sinterpulver (SP) hergestellt wird durch Vermahlung der Komponenten (A), (B) und (C) bei einer Temperatur im Bereich von -210 bis -195°C.

8. Verfahren gemäß einem der Ansprüche 1 bis 7, **dadurch gekennzeichnet, dass** die Komponente (A) ausgewählt ist aus der Gruppe bestehend aus PA 6, PA 6.6, PA 6.10, PA 6.12, PA 6.36, PA 6/6.6, PA 6/6I6T, PA 6/6I und PA 6/6T.

9. Verfahren gemäß einem der Ansprüche 1 bis 8, **dadurch gekennzeichnet, dass** die Komponente (C) ausgewählt ist aus der Gruppe bestehend aus PSU, PESU und PPSU.

10. Verfahren gemäß einem der Ansprüche 1 bis 9, **dadurch gekennzeichnet, dass** das Sinterpulver (SP) zusätzlich zumindest ein Additiv ausgewählt aus der Gruppe bestehend aus Antinukleierungsmitteln, Stabilisatoren, Endgruppenfunktionalisierern und Farbstoffen enthält.

11. Formkörper erhältlich nach einem Verfahren gemäß einem der Ansprüche 1 bis 10.

12. Verwendung mindestens eines Polyarylethers in einem Sinterpulver (SP), das die Komponenten

(A) mindestens ein teilkristallines Polyamid enthaltend mindestens eine Einheit ausgewählt aus der Gruppe bestehend aus $-NH-(CH_2)_m-NH-$Einheiten, wobei m 4, 5, 6, 7 oder 8 bedeutet, $-CO-(CH_2)_n-NH-$Einheiten, wobei n 3, 4, 5, 6 oder 7 bedeutet, und $-CO-(CH_2)_o-CO-$Einheiten, wobei o 2, 3, 4, 5 oder 6 bedeutet,
(B) mindestens ein Polyamid 6I/6T,
(C) mindestens einen Polyarylether

enthält, zur Verbreiterung des Sinterfensters ($W_{SP}$) des Sinterpulvers (SP) gegenüber dem Sinterfenster ($W_{AB}$), einer Mischung aus den Komponenten (A) und (B), wobei das Sinterfenster ($W_{SP}$; $W_{AB}$) jeweils die Differenz zwischen der Onset-Temperatur des Aufschmelzens ($T_M^{onset}$) und der Onset-Temperatur der Kristallisation ($T_C^{onset}$) ist, wobei der Polyarylether die Bausteine der allgemeinen Formel (I)

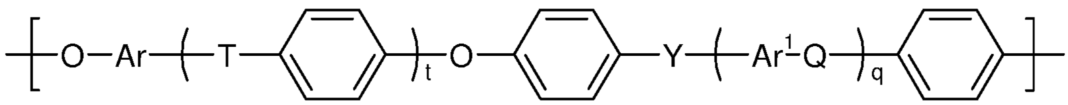

(I)

mit folgenden Bedeutungen:

t, q: unabhängig voneinander 0, 1, 2 oder 3,
Q, T, Y: unabhängig voneinander jeweils eine chemische Bindung oder Gruppe, ausgewählt aus -O-, -S-, $-SO_2-$, S=O, C=O, -N=N- und $-CR^aR^b-$, wobei $R^a$ und $R^b$ unabhängig voneinander jeweils für ein Wasserstoffatom oder eine $C_1$-$C_{12}$-Alkyl-, $C_1$-$C_{12}$-Alkoxy- oder $C_6$-$C_{18}$-Arylgruppe stehen und wobei wenigstens eines aus Q, T und Y für $-SO_2-$ steht und
Ar, $Ar^1$ : unabhängig voneinander eine Arylengruppe mit von 6 bis 18 Kohlenstoffatomen,

enthält, und wobei die Komponente (B) ein amorphes Copolyamid ist.

**Claims**

1. A process for producing a shaped body by selective laser sintering of a sinter powder (SP), wherein the sinter powder (SP) comprises the following components:

(A) at least one semicrystalline polyamide comprising at least one unit selected from the group consisting of $-NH-(CH_2)_m-NH-$ units where m is 4, 5, 6, 7 or 8, $-CO-(CH_2)_n-NH-$ units where n is 3, 4, 5, 6 or 7, and $-CO-(CH_2)_o-CO-$ units where o is 2, 3, 4, 5 or 6,
(B) at least one nylon-6I/6T,
(C) at least one polyaryl ether,

wherein
component (C) is a polyaryl ether comprising units of the general formula (I)

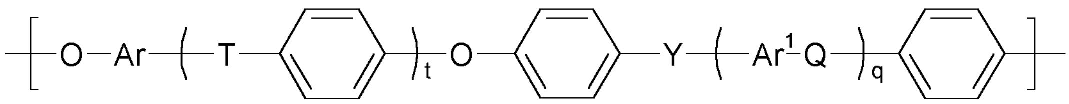

(I)

with the following definitions:

t, q: each independently 0, 1, 2 or 3,
Q, T, Y: each independently a chemical bond or group selected from -O-, -S-, $-SO_2-$, S=O, C=O, -N=N- and $-CR^aR^b-$ where $R^a$ and $R^b$ are each independently a hydrogen atom or a $C_1$-$C_{12}$-alkyl, $C_1$-$C_{12}$-alkoxy or $C_6$-$C_{18}$-aryl group and where at least one of Q, T and Y is $-SO_2-$ and
Ar, $Ar^1$: each independently an arylene group having from 6 to 18 carbon atoms, and wherein component (B) is an amorphous copolyamide.

2. The process according to claim 1, wherein the sinter powder (SP) comprises in the range from 20% to 90% by weight of component (A), in the range from 5% to 40% by weight of component (B) and in the range from 5% to 40% by weight of component (C), based in each case on the sum total of the percentages by weight of components (A), (B) and (C).

3. The process according to claim 1 or 2, wherein the sinter powder (SP) has
a D10 in the range from 10 to 30 μm,
a D50 in the range from 25 to 70 μm and
a D90 in the range from 50 to 150 μm,
wherein the particle sizes are determined by analyzing the sinter powder (SP) by laser diffraction.

4. The process according to any of claims 1 to 3, wherein the sinter powder (SP) has a melting temperature ($T_M$) in the range from 180 to 270°C, wherein the melting temperature ($T_M$) is determined by dynamic differential calorimetry.

5. The process according to any of claims 1 to 4, wherein the sinter powder (SP) has a crystallization temperature ($T_C$) in the range from 120 to 190°C, wherein the crystallization temperature ($T_C$) is determined by dynamic differential calorimetry.

6. The process according to any of claims 1 to 5, wherein the sinter powder (SP) has a sintering window ($W_{SP}$), wherein the sintering window ($W_{SP}$) is the difference between the onset temperature of melting ($T_M^{onset}$) and the onset temperature of crystallization ($T_C^{onset}$) and wherein the sintering window ($W_{SP}$) is in the range from 18 to 45 K.

7. The process according to any of claims 1 to 6, wherein the sinter powder (SP) is produced by grinding components (A), (B) and (C) at a temperature in the range from -210 to -195°C.

8. The process according to any of claims 1 to 7, wherein component (A) is selected from the group consisting of PA 6, PA 6.6, PA 6.10, PA 6.12, PA 6.36, PA 6/6.6, PA 6/6I6T, PA 6/61 and PA 6/6T.

9. The process according to any of claims 1 to 8, wherein component (C) is selected from the group consisting of PSU, PESU and PPSU.

10. The process according to any of claims 1 to 9, wherein the sinter powder (SP) additionally comprises at least one additive selected from the group consisting of antinucleating agents, stabilizers, end group functionalizers and dyes.

**11.** A shaped body obtainable by a process according to any of claims 1 to 10.

**12.** The use of at least one polyaryl ether in a sinter powder (SP) comprising the following components:

(A) at least one semicrystalline polyamide comprising at least one unit selected from the group consisting of $-NH-(CH_2)_m-NH-$ units where m is 4, 5, 6, 7 or 8, $-CO-(CH_2)_n-NH-$ units where n is 3, 4, 5, 6 or 7, and $-CO-(CH_2)_o-CO-$ units where o is 2, 3, 4, 5 or 6,
(B) at least one nylon-6I/6T,
(C) at least one polyaryl ether,

for broadening the sintering window ($W_{SP}$) of the sinter powder (SP) compared to the sintering window ($W_{AB}$) of a mixture of components (A) and (B), where the sintering window ($W_{SP}$; $W_{AB}$) in each case is the difference between the onset temperature of melting ($T_M^{onset}$) and the onset temperature of crystallization ($T_C^{onset}$),
wherein the polyaryl ether comprises the units of the general formula (I)

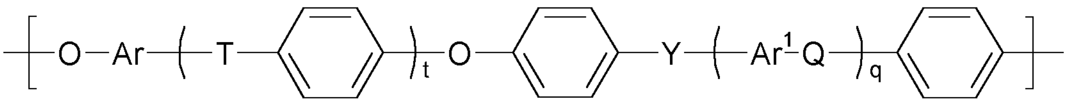

(I)

with the following definitions:

t, q: each independently 0, 1, 2 or 3,
Q, T, Y: each independently a chemical bond or group selected from -O-, -S-, $-SO_2-$, S=O, C=O, -N=N- and $-CR^aR^b-$ where $R^a$ and $R^b$ are each independently a hydrogen atom or a $C_1$-$C_{12}$-alkyl, $C_1$-$C_{12}$-alkoxy or $C_6$-$C_{18}$-aryl group and where at least one of Q, T and Y is $-SO_2-$ and
Ar, $Ar^1$: each independently an arylene group having from 6 to 18 carbon atoms,

and wherein component (B) is an amorphous copolyamide.

## Revendications

**1.** Procédé pour la préparation d'un corps moulé par frittage laser sélectif d'une poudre pour frittage (SP), **caractérisé en ce que** la poudre pour frittage (SP) contient les composants

(A) au moins un polyamide partiellement cristallin contenant au moins un motif choisi dans le groupe constitué par des motifs $-NH-(CH_2)_m-NH-$, m signifiant 4, 5, 6, 7 ou 8, des motifs $-CO-(CH_2)_n-NH-$, n signifiant 3, 4, 5, 6 ou 7, et des motifs $-CO-(CH_2)_o-CO-$, o signifiant 2, 3, 4, 5 ou 6,
(B) au moins un polyamide 6I/6T,
(C) au moins un polyaryléther,

le composant (C) étant un polyaryléther qui contient des blocs de construction de formule générale (I)

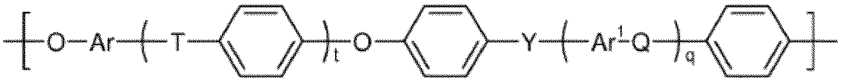

(I)

avec les significations suivantes :

t, q : indépendamment l'un de l'autre 0, 1, 2 ou 3,
Q, T, Y : indépendamment les uns des autres à chaque fois une liaison chimique ou un groupe choisi parmi -O-, -S-, $-SO_2-$, S=O, C=O, -N=N- et $-CR^aR^b-$, $R^a$ et $R^b$ représentant indépendamment l'un de l'autre à chaque fois un atome d'hydrogène ou un groupe $C_{1-12}$-alkyle, $C_{1-12}$-alcoxy ou $C_{6-18}$-aryle et au moins l'un parmi Q, T et Y représentant $-SO_2-$ et

Ar, $Ar^1$ : indépendamment l'un de l'autre un groupe arylène comportant 6 à 18 atomes de carbone, et le composant (B) étant un copolyamide amorphe.

**2.** Procédé selon la revendication 1, **caractérisé en ce que** la poudre pour frittage (SP) contient dans la plage de 20 à 90 % en poids du composant (A), dans la plage de 5 à 40 % en poids du composant (B) et dans la plage de 5 à 40 % en poids du composant (C), à chaque fois par rapport à la somme des pourcentages en poids des composants (A), (B) et (C).

**3.** Procédé selon la revendication 1 ou 2, **caractérisé en ce que** la poudre pour frittage (SP) présente une valeur de D10 dans la plage de 10 à 30 μm, une valeur de D50 dans la plage de 25 à 70 μm et une valeur de D90 dans la plage de 50 à 150 μm, dans lequel, pour la détermination des tailles de particule, la poudre pour frittage (SP) est mesurée par diffraction laser.

**4.** Procédé selon l'une quelconque des revendications 1 à 3, **caractérisé en ce que** la poudre pour frittage (SP) présente une température de fusion ($T_M$) dans la plage de 180 à 270 °C, la température de fusion ($T_M$) étant déterminée au moyen de calorimétrie différentielle dynamique.

**5.** Procédé selon l'une quelconque des revendications 1 à 4, **caractérisé en ce que** la poudre pour frittage (SP) présente une température de cristallisation ($T_C$) dans la plage de 120 à 190 °C, la température de cristallisation ($T_C$) étant déterminée au moyen de calorimétrie différentielle dynamique.

**6.** Procédé selon l'une quelconque des revendications 1 à 5, **caractérisé en ce que** la poudre pour frittage (SP) présente une fenêtre de frittage ($W_{SP}$), la fenêtre de frittage ($W_{SP}$) étant la différence entre la température de début de la fusion ($T_M^{début}$) et la température de début de la cristallisation ($T_C^{début}$) et la fenêtre de frittage ($W_{SP}$) se situant dans la plage de 18 à 45 K.

**7.** Procédé selon l'une quelconque des revendications 1 à 6, **caractérisé en ce que** la poudre pour frittage (SP) est préparée par la mouture des composants (A), (B) et (C) à une température dans la plage de -210 à -195 °C.

**8.** Procédé selon l'une quelconque des revendications 1 à 7, **caractérisé en ce que** le composant (A) est choisi dans le groupe constitué par PA 6, PA 6.6, PA 6.10, PA 6.12, PA 6.36, PA 6/6.6, PA 6/6I6T, PA 6/6I et PA 6/6T.

**9.** Procédé selon l'une quelconque des revendications 1 à 8, **caractérisé en ce que** le composant (C) est choisi dans le groupe constitué par PSU, PESU et PPSU.

**10.** Procédé selon l'une quelconque des revendications 1 à 9, **caractérisé en ce que** la poudre pour frittage (SP) contient de plus au moins un additif choisi dans le groupe constitué par des agents anti-nucléation, des stabilisants, des agents de fonctionnalisation de groupes terminaux et des colorants.

**11.** Corps moulé pouvant être obtenu par un procédé selon l'une quelconque des revendications 1 à 10.

**12.** Utilisation d'au moins un polyaryléther dans une poudre pour frittage (SP) qui contient les composants

(A) au moins un polyamide partiellement cristallin contenant au moins un motif choisi dans le groupe constitué par des motifs $-NH-(CH_2)_m-NH-$, m signifiant 4, 5, 6, 7 ou 8, des motifs $-CO-(CH_2)_n-NH-$, n signifiant 3, 4, 5, 6 ou 7, et des motifs $-CO-(CH_2)_o-CO-$, o signifiant 2, 3, 4, 5 ou 6,
(B) au moins un polyamide 6I/6T,
(C) au moins un polyaryléther,

pour l'élargissement de la fenêtre de frittage ($W_{SP}$) de la poudre pour frittage (SP) par rapport à la fenêtre de frittage ($W_{AB}$) d'un mélange des composants(A) et (B), la fenêtre de frittage ($W_{SP}$ ; $W_{AB}$) étant à chaque fois la différence entre la température de début de la fusion ($T_M^{début}$) et la température de début de la cristallisation ($T_C^{début}$), le polyaryléther contenant les blocs de construction de formule générale (I)

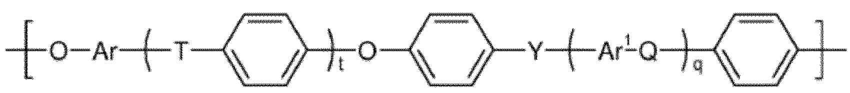

(I)

avec les significations suivantes :

t, q : indépendamment l'un de l'autre 0, 1, 2 ou 3,
Q, T, Y : indépendamment les uns des autres à chaque fois une liaison chimique ou un groupe choisi parmi -O-, -S-, $-SO_2-$, S=O, C=O, -N=N- et $-CR^aR^b-$, $R^a$ et $R^b$ représentant indépendamment l'un de l'autre à chaque fois un atome d'hydrogène ou un groupe $C_{1-12}$-alkyle, $C_{1-12}$-alcoxy ou $C_{6-18}$-aryle et au moins l'un parmi Q, T et Y représentant $-SO_2-$ et
Ar, $Ar^1$ : indépendamment l'un de l'autre un groupe arylène comportant 6 à 18 atomes de carbone, et le composant (B) étant un copolyamide amorphe.

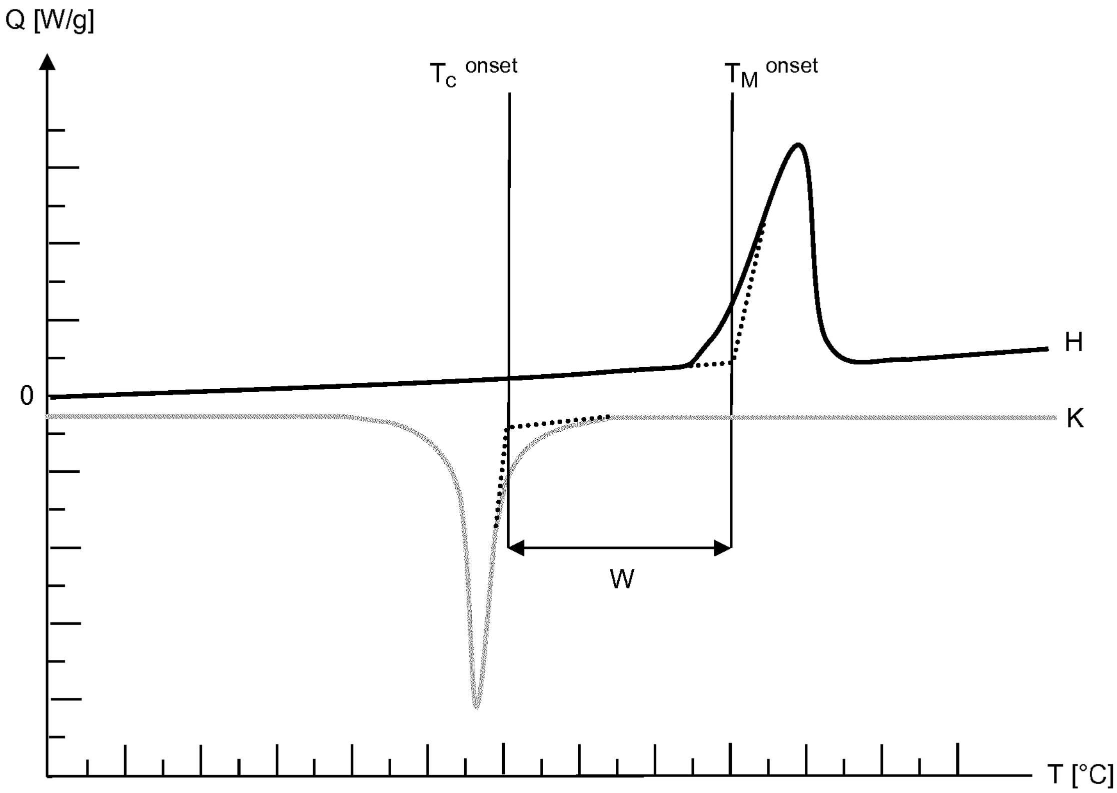


**Figur 1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6136948 A
- WO 9606881 A
- WO 2009114715 A
- WO 2011124278 A
- EP 1443073 A
- WO 2016112283 A
- WO 2012041793 A
- US 2014141166 A
- CN 104231607
- US 20150259530 A
- US 20140141166 A


### In der Beschreibung aufgeführte Nicht-Patentliteratur


- **VERBELLEN LEANDER et al.** Characterization of polyamide powders for determination of laser sintering processability. *European Polymer Journal,* 21. Dezember 2015, vol. 75, 163-174